# EUROPEAN PATENT APPLICATION

(11) **EP 4 781 832 A1**
(43) Date of publication of application: **29.07.2026**
(21) Application number: 25382033.6
(22) Date of filing: 22.01.2025
(51) Int. Cl.: A23D 7/005, A23P 10/30

(54) **STABILIZED OIL-BASED MICROPARTICLES AND METHODS FOR THE PRODUCTION THEREOF**

(71) Applicant: Cubiq Foods, S.L., 08401 Granollers (ES)
(72) Inventor: REVILLA SÁNCHEZ, Raquel, E-08401 Granollers, Barcelona (ES); BORREGO GONZÁLEZ, Sara, E-08401 Granollers, Barcelona (ES); QUISPE VARGAS, Jackeline, E-08401 Granollers, Barcelona (ES); MONTEFELTRO, Andrés, E-08401 Granollers, Barcelona (ES)
(74) Representative: ABG Intellectual Property Law, S.L.

(57) **Abstract**

The invention relates to stabilized microparticles containing oils and to a method of producing these stabilized microparticles. The invention also relates to compositions comprising the stabilized microparticles and to the uses of the stabilized microparticles and the compositions.

## Description

### FIELD OF THE INVENTION

The invention relates to stabilized microparticles containing oils and to a method of producing these stabilized microparticles. The invention also relates to compositions comprising the stabilized microparticles and to the uses of the stabilized microparticles and the compositions.

### BACKGROUND OF THE INVENTION

Dietary intake of high-added value oilshas been linked to many health benefits, from improved cardiovascular health and cognitive function, to reduced levels of inflammation, maintenance of normal vision and brain function, so they are often found in baby foods or nutraceuticals. Health benefits of these high-added value oils, for example, long chain polyunsaturated fatty acids (PUFA's), are well-recognized. However, the direct addition of the high-added value oils into food products and supplements is a technological challenge due to oxidative stress, rancidity and instability experienced by fatty acids including DHA and ARA, which reduces shelf life of foods and supplements with high-added value oils.

High-added value oils require protection of the oil during use. Encapsulation techniques can inhibit degradation and preserve the quality of products formulated with these compounds. This process consists in coating tiny droplets or particles of an active substance such as drugs, proteins, hormones, pesticides, fertilizers, cosmetics, perfumes or dyes with a thin barrier wall to obtain individualized microparticles. The main purposes of this technology are the stabilization of particles and the protection and/or isolation of active core material from surroundings which allows materials to be handled more easily for application.

The main problems and challenges in the encapsulation of oils is their stability and long-term protection. Dietary lipids may undergo auto-, photo-, thermal- and enzymatic oxidation. Auto-oxidation is the most common process and is defined as the spontaneous reaction of atmospheric oxygen with lipids. If auto-oxidation occurs during the shelf-life of a fatty acid product this will significantly compromise the quality of the product and sacrifice consumer acceptance.

In general terms, due to their unsaturated nature, PUFA's are sensitive to oxidation. Oxidation lowers the nutritional value and quality of fatty foods. Primary products of lipid oxidation are hydroperoxides which are odourless and flavourless transitionary intermediates. Hydroperoxides decompose to secondary oxidation products, small volatile mechanisms that cause off-aromas associated with oxidative rancidity, pronounced taste and smell of fish and shellfish oils. Unsaturated fatty acids (such as DHA and ARA) are generally the reactants affected by such reactions.

Several spray-dry technologies exist seeking to minimize high-added value oils oxidation; however ingredients used for stabilisation are themselves allergenic (milk and lactose-based), which are not suitable for various food applications, infant formulae or hypoallergenic applications.

Furthermore, previous attempts to encapsulate high-added value oils have failed due to the generation of high amounts of un-encapsulated oil and subsequent oxidation products during shelf life, in addition to undesirable particle size for incorporation into food matrices. In addition, the incorporation of other micro-encapsulates in food matrices did not give enough protection for standard manufacturing processes, including mixing in water based applications (where previously developed microparticles lose their components), high mechanical shear stress, high temperatures of cooking, high pressure of pasteurization processes or repetitive freezing cycles.

In summary, oils present difficulties in terms of their use in foods and food supplements due to their taste, odour and oxidative instability.

Thus, it is important to protect the oil from oxidising conditions such as oxygen or temperature throughout the encapsulation process to make them resistant to downstream processes. If the structure of the microparticle is not sufficiently robust or if it has not been designed properly, it may be released earlier than desired. During the encapsulation process functional properties may be lost, e.g. the use of high temperatures may cause volatile components to be lost or degraded affecting their activity or organoleptic properties. Moreover, the optimisation of encapsulation methods and the selection of suitable materials can influence the economic viability of encapsulation.

The patent document US6974592B2 describes a microcapsule comprising an agglomeration of primary microparticles, each individual primary microcapsule having a primary shell and the agglomeration being encapsulated by an outer shell. The patent US6974592B2 also described a process for preparing the microparticles, wherein the temperature to form shell material comprising the first and second polymer components, the shell material forming primary shells around the loading substance is about 50°C.

Therefore, there is a need for providing methods for obtaining stabilized microparticles comprising oils that allows for their long-term stability and protection.

### SUMMARY OF THE INVENTION

The authors of the present invention have addressed the problem of taste, odour and oxidative instability of oils by providing the oil in the form of a core-shell microparticle.

The inventors have developed a method for obtaining stabilized microparticles comprising oils that increase the stability and shelf life of the encapsulated oil. In addition, this method reduces the loss of raw materials during the microparticle stabilization, protects the core of the microparticle during particle formation and protects the core from temperature fluctuations, oxygen, mechanical stress and chemical or enzymatic degradation or solubilisation of the components. This method allows the microparticle to withstand different processing conditions. Moreover, this method is scalable at a lower cost than other methodologies.

Thus, in a first aspect, the present invention relates to a method, hereinafter the method of the invention, for obtaining a stabilized microparticle comprising the steps of:
(i) providing an oil-in-water (o/w) emulsion comprising a lipid phase (o), a water phase (w) and an emulsifier with net positive charge, wherein the aqueous phase contains at least one hydrocolloid with net negative charge,
(ii) contacting the o/w emulsion with a polymer wherein said contacting is carried out under pH conditions that results in that the net charge of the polymer is positive and under conditions that allow the load binding of the polymer and hydrocolloid into microparticles containing a core region formed by the emulsion and a polymer shell and
(iii) stabilizing the polymer thereby leading to stabilized microparticles.

In another aspect, the present invention relates to a stabilized microparticle, hereinafter the stabilized microparticle of the invention, comprising:
a) a core, wherein the core comprises:
   i) an oil-in-water (o/w) emulsion; comprising a lipid phase (o) and a water phase (w) and an emulsifier with net positive charge and
   ii) at least a first hydrocolloid with net negative charge dissolved or dispersed in the aqueous phase,
b) a shell comprising at least one stabilized polymer layer.

In another aspect, the present invention relates to a stabilized microparticle obtained by the method of the invention.

In another aspect, the present invention relates to a composition comprising the stabilized microparticle of the invention or a stabilized microparticle obtained by the method of the invention.

In another aspect, the present invention relates to a food or feed composition comprising at least one stabilized microparticle obtained by the method of the invention or at least one stabilized microparticle of the invention, said food or feed composition comprising one or more edible ingredients.

In another aspect, the present invention relates to a pharmaceutical composition comprising at least one stabilized microparticle obtained by the method of the invention or at least one stabilized microparticle of the invention, and a pharmaceutically acceptable carrier.

In another aspect, the present invention relates to the pharmaceutical composition for use as a medical product.

In another aspect, the present invention relates to the pharmaceutical composition for use in the treatment and/or prevention of cardiovascular diseases, metabolic diseases, skin related diseases, pain related disorders, immune disorders, diseases of the intestinal tract and brain related diseases.

In another aspect, the present invention relates to a cosmetic composition, hereinafter the cosmetic composition of the invention, comprising at least one stabilized microparticle obtained by the method of the invention or at least one stabilized microparticle of the invention, and a cosmetically acceptable carrier.

In another aspect, the present invention relates to the use of the cosmetic composition of the invention for non-therapeutic cosmetic treatment and/or care of skin and/or hair.

In another aspect, the present invention relates to a nutraceutical composition comprising at least one stabilized microparticle obtained by the method of the invention or at least one stabilized microparticle of the invention, and a nutraceutical acceptable carrier.

In another aspect, the present invention relates to the use of a stabilized microparticle obtained by the method of the invention or of the stabilized microparticle of the invention as delivery agent of the oil forming part of the emulsion.

In another aspect, the present invention relates to the use of a stabilized microparticle obtained by the method of the invention or of the stabilized microparticle of the invention as an additive in feed.

In another aspect, the present invention relates to the use of a stabilized microparticle obtained by the method of the invention or of the stabilized microparticle of the invention as an antioxidant.

In another aspect, the present invention relates to the use of a stabilized microparticle obtained by the method of the invention or of the stabilized microparticle of the invention to protect compounds from oxidation.

### BRIEF DESCRIPTION OF THE DRAWINGS

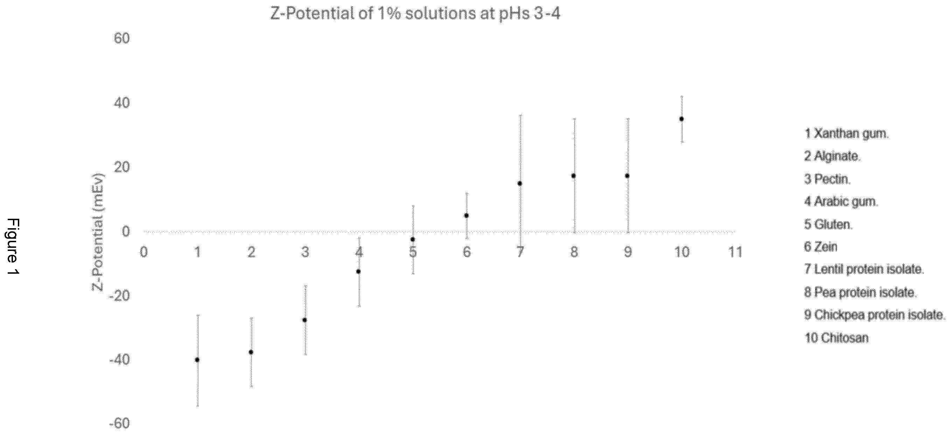

**Figure 1****.** Charge of the microparticles components. 1% (w/w) solutions of the different ingredients that can take part of the microparticles were prepared and adjusted to pH 3-4. The graphic shows the different components from 1 to 10 being xanthan gum, alginate, pectin, arabic gum, gluten, zein, lentil protein isolate, pea protein isolate, chickpea protein isolate and chitosan vs their measured Z-potential when 1% (w/w) solution was prepared and the pH adjusted to 3-4.

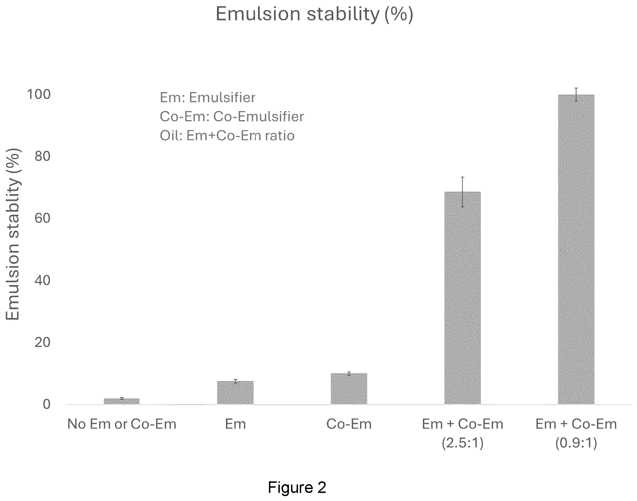

**Figure 2****.** Emulsion stability. The effect of different components of the emulsions was tested to determine its role in the stability of the emulsion. The emulsions were prepared according to the examples and its stability was measured after centrifugation and measuring the phase separation (%). The graphic shows the stability of different types of emulsions without emulsifier (Em) or co-emulsifier (Co-Em), only Em, only Co-Em, adding both Em and CoEm in a ratio Oil:Em+CoEm of 2.5 : 1 (w:w) and in ratio 0.9:1.

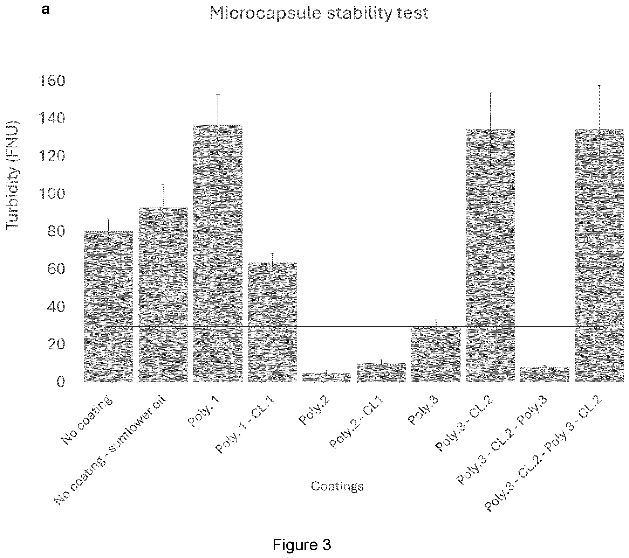

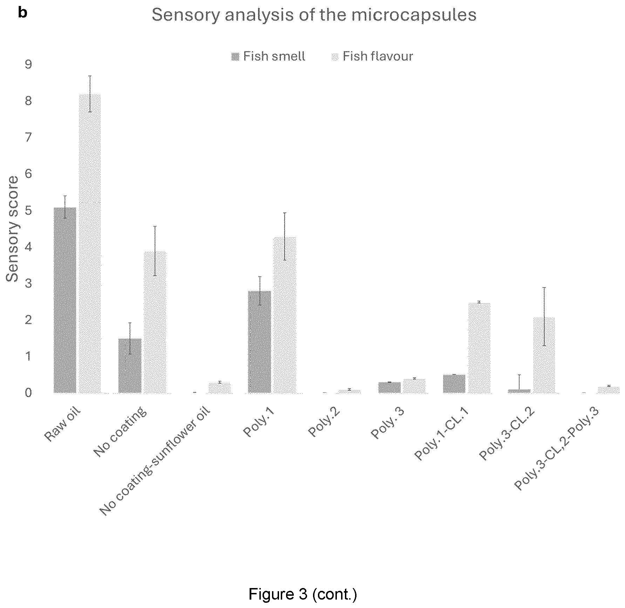

**Figure 3****.** Microparticles stability and its relation with sensory analysis for different coatings and cross-linkings. The minimum stability for microparticles necessary to not detect the fish smell and/or flavour in a model food matrix was studied. **a.** Microparticles stability. The graph shows the effect of different polymer coatings (Poly. 1, Poly.2 and Poly.3) and the cross-linkers applied after the coating (CL. 1 and CL.2) in the stability of the final microparticle. In addition, 3 layers or 4 were carried out for Poly.3 and CL.2. The stability of the capsules is measured after re-dispersion, centrifugation and measurement of the turbidity of the supernatant to assess the ability of the particles to maintain their integrity after processing. **b.** The sensory analysis. The microparticles were introduced into mayonnaise sauce to obtain at least 625 mg DHA per 100 g of final product. The tasters evaluated the fish smell and flavour from 0 to 10 for each sample and the media value is represented.

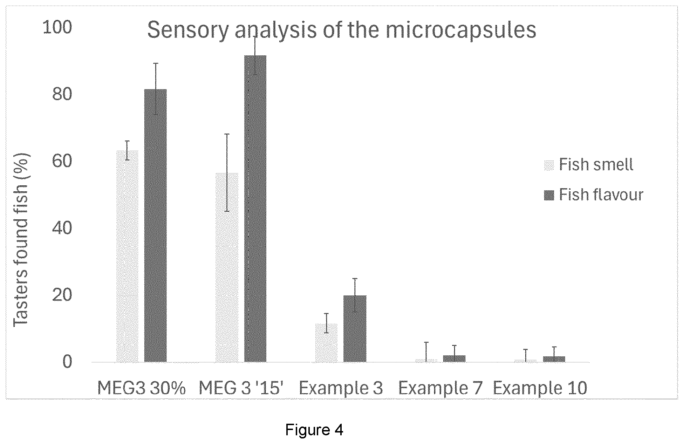

**Figure 4****.** Sensory analysis to correlate the oxidation state of the oil under oxidation conditions (table II) with fish attributes in a model food matrix. The microparticles were introduced into dairy matrices to obtain 250 mg of DHA of final product. The tasters indicated if fishy smell or flavour was found. Finally, the percentage of tasters that found fishy attributes is represented vs the microparticles types including commercial products to compare.

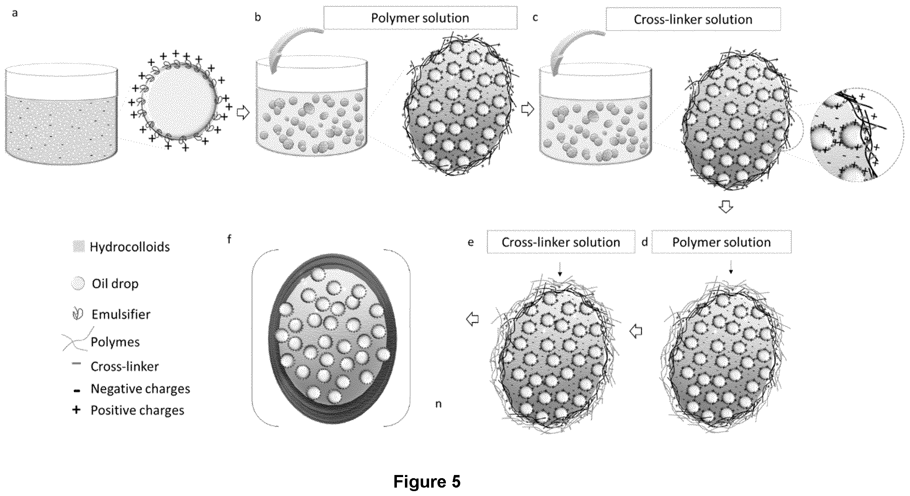

**Figure 5****.** Stages in the process of obtaining oil microparticles. **a.** Preparation of emulsion of oil droplets in water containing negatively charged hydrocolloid and positively charged emulsifier. **b.** The positive polymer solution is dripped onto the emulsion to obtain the oilcontaining microparticles. **c.** The microparticles are stabilised when the crosslinker solution is dripped, usually when the polymer coating is crosslinked. **d.** Another layer is obtained when the polymer solution is dripped. **e.** The last polymer layer is stabilised with crosslinker solution. **f.** The process (d and e) can be repeated several times to obtain multilayer microparticles.

### DETAILED DESCRIPTION OF THE INVENTION

### Method for obtaining stabilized microparticles

In a first aspect, the present invention relates to a method, hereinafter the method of the invention, for obtaining a stabilized microparticle comprising the steps of:
(i) providing an oil-in-water (o/w) emulsion comprising a lipid phase (o), a water phase (w) and an emulsifier with net positive charge, wherein the aqueous phase contains at least one hydrocolloid with net negative charge,
(ii) contacting the o/w emulsion with a polymer wherein said contacting is carried out under pH conditions that results in that the net charge of the polymer is positive and under conditions that allow the load binding of the polymer and hydrocolloid into microparticles containing a core region formed by the emulsion and a polymer shell and
(iii) stabilizing the polymer thereby leading to stabilized microparticles.

The term "microparticle" is used to designate colloidal systems having spherical or quasispherical shape and having a mean size less than 1 millimetre (mm), generally ranging from 0.5 to 999 micrometers (µm), typically ranging from 1 to 900 µm. In a particular embodiment, the microparticles of the invention have a size less than 1 mm, generally comprised between 0.1 and 999 µm, typically between 0.2 and 900 µm, advantageously between 0.3 and 500 µm, preferably between 0.4 and 250 µm, more preferably between 0.5 and 125 µm, even more preferably between 0.7 and 50 µm, still more preferably between 1 and 30 µm.

"Mean size" is understood as the average diameter of the microparticle population, moving together in an aqueous medium. The mean size of these systems can be measured by standard methods known by the person skilled in the art, such as optic microscopy and dynamic light scattering methods.

In a particular embodiment, the microparticle is a polynuclear microparticle. Polynuclear microparticles refer to core-shell structures. The core region is formed by the emulsion and comprises multiple oil droplets (nuclei) stabilized within the shell. In a particular embodiment, the oil drops have a size of between 0.5µm and 20 µm.

In another particular embodiment, the microparticle comprises between 10 and 36 millions of drop oils (nuclei).

The first step (i) of the method of the invention comprises providing an oil-in-water (o/w) emulsion comprising a lipid phase (o), a water phase (w) and an emulsifier with net positive charge, wherein the aqueous phase contains at least one hydrocolloid with net negative charge.

The term "emulsion", as used herein, refers to a mixture of two or more liquids that are immiscible, in which one liquid (the dispersed phase) is dispersed in the other (the continuous phase). The emulsion which forms the stabilized microparticle according to the present invention is an oil-in-water (o/w) emulsion. As used herein, the term "oil-in-water (o/w) emulsion" refers to an emulsion in which the dispersed phase is an oil and in which the continuous phase is an aqueous solution. Typically, the ratio of lipid to aqueous phase is 1:1 to 1:30. Preferably, the emulsion is stable. "Stable emulsion" refers to a mixture that does not experience phase separation as a function of time.

Suitable methods for detecting the formation of the emulsion include, without limitation:
- Viscosity determination: the formation of the emulsion is accompanied by an increase in viscosity that the can be determined using widely available methods,
- Visual inspection: the formation of the emulsion can be determined by adding a hydrosoluble dye to the mixture so that, before the emulsion is formed, the due appears in the aqueous phase whereas once the emulsion is formed, it appears dispersed throughout the emulsion in the aqueous phase,
- Microscopic examination: visualization of the oil droplet within the aqueous phase
- Conductivity determination: the formation of the emulsion is accompanied by an increase in conductivity,
- Detection of phase separation after centrifugation,
- Dilution: turbidity measurement after the addition of a small amount of the emulsion to an aqueous solvent.

All these methods are routine methods that can be found, for instance, in Hu et al. (Journal of Food and Drug Analysis, 2017, 25: 16-26), which is incorporated herein by reference in its entirety.

In a particular embodiment, the providing of the oil-in-water (o/w) emulsion comprising a lipid phase (o), a water phase (w) and an emulsifier with net positive charge in step (i) of the method of the invention involves a method comprising the steps of:
(a) contacting an oil with an emulsifier and at least one hydrocolloid, said emulsifier and said at least one hydrocolloid being provided in aqueous solution and
(b) processing the mixture obtained in step (a) under conditions adequate for the dispersion of the oil in the aqueous solution to obtain the oil-in-water emulsion (o/w).

In some embodiments, the second step (b) is carried out until the oil is stably dispersed within the aqueous phase.

"Stably dispersed", as used herein, means that the oil particles are dispersed as solids in the continuous fluid phase of the composition, i.e. the liquid hydrogel. The term "stably" preferably relates to the particles not sedimenting to the bottom of the composition or floating to the surface of the composition over typical time periods of storage.

In a particular embodiment, the lipid phase (o) is an oil or an emulsion comprising an oil and an emulsifier with net negative or neutral charge.

The term "neutral charge" refers to a state where the total positive and negative charges are balanced, resulting in no overall electrical charge.

In a more particular embodiment, the emulsifier with net negative or neutral charge is selected from the group consisting of: lecithin, mono or diglycerides, esters and polysorbates.

In another particular embodiment, the method of the invention further comprises (iv) forming one or more additional stabilized polymer layers around the shell of the microparticle, wherein each additional stabilized polymer layer is added by a method that comprises:
a) contacting the microparticle with an additional polymer, wherein said contacting is carried out under conditions that result in the net charge of the additional polymer being opposite to the net charge of the microparticle and under conditions that allow the binding of the additional polymer and the microparticle, and
b) stabilizing the additional polymer thereby leading to the formation of an additional stabilized layer.

The term "net charge" means the sum total of the charges of the individual elements. In a particular embodiment, the conditions of step a) result in a positive net charge of the additional polymer and a negative net charge of the microparticle. In another particular embodiment, the conditions of step a) result in a negative net charge of the additional polymer and a positive net charge of the microparticle.

In a more particular embodiment, the method of the invention further comprises forming between 1 and 4 stabilized polymer layers in the shell of the microparticle.

In some embodiments, the additional polymer used in each of the additional stabilized polymer layers is the same as the polymer used in step (ii).

In other embodiments, the additional polymer used in each of the additional stabilized polymer layers is different from the polymer used in step (ii).

In some embodiments, the stabilization of the additional polymer applied in each of the additional stabilized polymer layers is carried out by the same physical or chemical means used in step (iii).

In other embodiments, the stabilization of the additional polymer applied in each of the additional stabilized polymer layers is carried out by physical or chemical means other than those used in step (iii).

In the first step (i) of the method of the invention the aqueous phase contains at least one hydrocolloid with net negative charge.

The terms "hydrocolloid" refers to a heterogeneous group of long chain polymers (polysaccharides and proteins) characterised by their property of forming viscous dispersions and/or gels when dispersed in water.

The term "net charge" means the sum total of the charges of the individual elements. The hydrocolloids with net negative charge refer to anionic hydrocolloids, i.e. hydrocolloids which the sum of total of the charges is negative at the pH studied.

In a particular embodiment, the at least one hydrocolloid is a gum.

The term "gum" as used herein refers to hydrocolloids which are polysaccharides capable of causing a large increase in a solution's viscosity, even at small concentrations, they may be of natural or non-natural origin.

Suitable hydrocolloids for use according to the present invention include, without limitation animal, vegetable or microbial proteins or polysaccharides and its derivates.

The term "microbial" refers to anything related to microorganisms, which are tiny, often single-celled organisms that are too small to be seen with the naked eye. Therefore, the term "microbial" includes microalgae, yeast, bacteria, fungi, protozoa, viruses and other organisms that are too small to be seen with the naked eye.

In a particular embodiment, the at least one hydrocolloid with net negative charge is selected from the group consisting of: agar, alginate, agar-agar, carragenate, cassia gum, xanthan gum, arabic gum, acacia gum, galactomannans such as guar gum and locust bean gum, glucomanans such as Konjac, xanthan gum with galactomannans, gellan gum, tara gum, gelatine, cellulose and modified cellulose such as carboxymethyl cellulose or methylcellulose, pectin, dextran, dextran derivatives, pullulan, xyloglucan, polyglutamate, starch and modified starch, hyaluronic acid, polyethylene glycol, polypropylene glycol, poly(tetramethylene ether) glycol, and/or combinations thereof.

The term carragenate includes any of the three commercial classes of carrageenan Kappa, Iota and Lambda. The term galactomannan includes, without limitation, polymers having mannose:galactose ratios of 1:1, 2:1, 3:1, 4:1, 5:1 such as fenugreek gum, (mannose:galactose ratio of ca. ~1:1), guar gum (mannose:galactose ratio of ca. 2:1), tara gum (mannose:galactose ratio of ca. 3:1), locust bean gum or carob gum (mannose:galactose ratio of ca. 4:1) or cassia gum (mannose:galactose ratio of ca. 5:1). The term "galactomannan" includes straight-chain polymer, with a small amount of branching, which contain β-(1→4)-linked D-mannose and D-glucose in a ratio of 1.6:1 and a degree of branching of about 8% through β-(1→6)-glucosyl linkages. Suitable sources of galactomannan include, without limitation, konjac root or salep powder.

In a particular embodiment, the at least one hydrocolloid with net negative charge is selected from the group consisting of: arabic gum, xanthan gum, alginate, carragenate, pectin, agar, cellulose, modified cellulose, polyglutamate, gellan gum and tragacanth gum.

The term "modified cellulose" refers to cellulose that has been chemically, physically, or enzymatically treated to alter its properties for specific applications. Examples of modified cellulose include, but are not limited to, carboxymethyl cellulose, methylcellulose, hydroxypropyl methylcellulose, nitrocellulose and cellulose acetate.

In another particular embodiment, a second hydrocolloid with net negative charge is used in step (i) of the method of the invention, wherein the second hydrocolloid is preferably a co-emulsifier.

Thus, in a particular embodiment, in the first step (i) of the method of the invention the aqueous phase contains two hydrocolloids with net negative charge.

In some embodiments, the term "second hydrocolloid" and "co-emulsifier" are used interchangeably. The second hydrocolloid with net negative charge used in step (i) of the method of the invention can be used as a co-emulsifier depending on its function. Coemulsifiers are not the main emulsifying agents, but complement or enhance their action, reinforcing the stability of the emulsion and preventing the components from separating.

The hydrocolloid content in the mixture is not particularly limiting as long as the aqueous solution comprising the hydrocolloid and the emulsifier form an o/w emulsion when combined with the oil in a method according to the present invention. In some embodiments, the concentration of hydrocolloid or of the mixture of hydrocolloids is lower than the concentration needed to acquire a solid or a semi-solid at the temperature at which the method of the invention is carried out. In a particular embodiment, the total content of the hydrocolloids with net negative charge is of between 0.5 and 40% (w/w). In additional embodiments, the total content of the hydrocolloids with net negative charge is of between 1 and 37% (w/w). In additional embodiments, the total content of the hydrocolloids with net negative charge is of between 1 and 35% (w/w). In additional embodiments, the total content of the hydrocolloids with net negative charge is of between 1 and 32% (w/w). In a preferred embodiment, the total content of the hydrocolloids with net negative charge is of between 1 and 30% (w/w).

In another particular embodiment, the at least one hydrocolloid used in the method of the invention has a molecular weight (kDa) of between 100 and 10000 kDa, preferably between 100 and 6000 kDa, more preferably between 200 and 5000 kDa.

The words "oil" or "fat" are used interchangeably herein, and refer to edible triacylglycerides of fatty acids.

Naturally occurring vegetable oils, fish oils, extraction oils or fats or oils from animal or plant planktons, fungi, or obtained by fermentation or microbiological origin, or fats or oils obtained synthetically contain a polyunsaturated fatty acid in the form of triglyceride, which can be directly used in the present invention. These may be appropriately selected depending upon the purposes. Since those having a higher content of the polyunsaturated fatty acids are more desired if some physiological effects are expected, the synthetic fat or oil, and fish oils and extraction oils or fats or oils from plant planktons can be preferably utilized.

When classified according to their composition, the oils are defined by defining the alcohol and the fatty acid constituents that result in the oil upon esterification.

As the constituent alcohol, the term includes glycerol as well as any fatty alcohol and amino alcohol provided that is adequate for human or animal consumption. Suitable fatty alcohols that can be used in the oils according to the present invention include, without limitation, tert-Butyl alcohol, tert-Amyl alcohol, 3-Methyl-3-pentanol, 1-Heptanol (enanthic alcohol), 1-Octanol (capryl alcohol), Pelargonic alcohol (1-nonanol), 1-Decanol (decyl alcohol, capric alcohol), Undecyl alcohol (1-undecanol, undecanol, Hendecanol), Lauryl alcohol (dodecanol, 1-dodecanol), Tridecyl alcohol (1-tridecanol, tridecanol, isotridecanol), Myristyl alcohol (1-tetradecanol), Pentadecyl alcohol (1-pentadecanol, pentadecanol), Cetyl alcohol (1-hexadecanol), Palmitoleyl alcohol (cis-9-hexadecen-1-ol), Heptadecyl alcohol (1-n-heptadecanol, heptadecanol), Stearyl alcohol (1-octadecanol), Oleyl alcohol (1-octadecenol), Nonadecyl alcohol (1-nonadecanol), Arachidyl alcohol (1-eicosanol), Heneicosyl alcohol (1-heneicosanol), Behenyl alcohol (1-docosanol), Erucyl alcohol (cis-13-docosen-1-ol), Lignoceryl alcohol (1-tetracosanol), Ceryl alcohol (1-hexacosanol), 1-Heptacosanol, Montanyl alcohol, cluytyl alcohol, or 1-octacosanol, 1-Nonacosanol, Myricyl alcohol, melissyl alcohol, or 1-triacontanol, 1-Dotriacontanol (Lacceryl alcohol), Geddyl alcohol (1-tetratriacontanol). Suitable amino alcohols include sphingosine.

The term "fatty acid" as used herein refers to an organic compound having a (C4-C28) hydrocarbon chain possessing a terminal carboxylic acid group (i.e., -COOH), which is either saturated or unsaturated. Saturated fatty acids are composed of only C-C single bonds, whereas unsaturated fatty acids have one or more C-C double bonds. The expression "trans fatty acid" refers to unsaturated fatty acids in which the two hydrogen atoms of a double bond are in trans configuration, i.e. one on each side of the double bond.

As the constituent fatty acid, a saturated or unsaturated fatty acid having the number of carbon atoms of preferably 10 or more, more preferably 12 or more, and even more preferably 14 or more is preferred, from the viewpoint of interfacial modification of the polyunsaturated fatty acid and the basic amino acid and/or the basic peptide. Specific examples of the saturated fatty acids forming part of the oils which form the emulsion include capric acid, lauric acid, myristic acid, pentadecylic acid, palmitic acid, margaric acid, stearic acid, nonadecanoic acid, arachidic acid, behenic acid, and isomers thereof, and the like. Preferred fatty acids are unsaturated fatty acids such as palmitoleic acid, oleic acid, vaccenic acid, linoleic acid, eicosadienoic acid, docosadienoic acid, linolenic acid, ricinoleic acid, arachidonic acid, erucic acid, and isomers thereof, condensates thereof, and isomers of the condensates, and the like. Among them, the unsaturated or saturated fatty acid preferably includes myristic acid, palmitic acid, stearic acid, oleic acid, ricinoleic acid, linoleic oil, arachidonic acid enriched oil, docosahexaenoic acid (DHA) enriched oil, eicosapentaenoic acid (EPA) and isomers thereof, condensates thereof, and isomers of the condensates.

In preferred embodiments, the fatty acid is an omega-3 fatty acid or an omega-6 fatty acid.

As used herein, "omega-3 fatty acid" refers to any polyunsaturated fatty acid having a first double bond as the third carbon-carbon bond from the terminal methyl end of its carbon chain. In particular embodiments, the omega-3 fatty acid may comprise a long chain omega-3 fatty acid. As used herein, "omega-6 fatty acid" refers to any polyunsaturated fatty acid having a first double bond as the sixth carbon-carbon bond from the terminal methyl end of its carbon chain.

Suitable omega-3 fatty acids for use in embodiments of the present application can be derived from algae, microalgae, fungi, filamentous fungi or microorganism by direct or recombinant fermentation processes, fish, animals, plants, or combinations thereof, for example. Examples of suitable omega-3 fatty acids include, but are not limited to, linolenic acid, alpha-linolenic acid, eicosapentaenoic acid, docosahexaenoic acid, stearidonic acid, eicosatetraenoic acid and combinations thereof. In some embodiments, suitable omega-3 fatty acids can be provided in fish oils, (e.g., menhaden oil, tuna oil, salmon oil, bonito oil, and cod oil), microalgae omega-3 oils or combinations thereof. In particular embodiments, suitable omega-3 fatty acids may be derived from commercially available omega-3 fatty acid oils, such as Microalgae DHA oil (from Martek, Columbia, MD), OmegaPure (from Omega Protein, Houston, TX), Marinol C-38 (from Lipid Nutrition, Channahon, IL), Bonito oil and MEG-3 (from Ocean Nutrition, Dartmouth, NS), Evogel (from Symrise, Holzminden, Germany), Marine Oil, from tuna or salmon (from Arista Wilton, CT), OmegaSource 2000, Marine Oil, from menhaden and Marine Oil, from cod (from OmegaSource, RTP, NC).

Suitable omega-6 fatty acids include, but are not limited to, linoleic acid, gamma-linolenic acid, dihommo-gamma-linolenic acid, arachidonic acid, eicosadienoic acid, docosadienoic acid, adrenic acid, docosapentaenoic acid and combinations thereof.

In one embodiment, the oil is substantially free of trans fatty acids. The content of trans fatty acids can be easily determined by the skilled in the art using well-known techniques, such as gas chromatography.

Suitable oils for use according to the present invention include, when defined according to their composition, oil naturally containing or enriched in conjugated or free linoleic acid, linolenic acid, arachidonic acid, docosahexaenoic acid (DHA) , eicosapentaenoic acid (EPA), arachidonic acid, omega-3 rich oils, which include flaxseed oil, fish oil, algal oil, and microalgae oil, such as oils from *Schizochytrium* sp.

Suitable oils for use according to the present invention include, when defined according to their origin, vegetable oil, algal oil, microalgal oil, a microbial oil or animal oil, like fish oil. Suitable vegetable oils include, without limitation, extracts oil from fruits, spices and herbs, or oil from seeds, such as aromatic oils, antioxidant oils, essential oils (such us Lavender, Peppermint, Eucalyptus, Tea Tree, Lemon, Frankincense, Rosemary, Chamomile, Clary Sage, Geranium, Ylang Ylang, Bergamot, Sandalwood, Patchouli, Cedarwood, Orange, Grapefruit, Lemongrass, Juniper Berry, Myrrh, Oregano, Rose, cinnamon, basel, parsley, ginger, etc.) oils with additives such as aromas, colorants, preservatives, antioxidants etc., palm oil, palm kernel oil, rapeseed oil, sunflower oil, coconut oil, canola oil, soybean oil, flaxseed oil, wheat germ oil, corn oil, rice oil, olive oil, cottonseed oil, safflower oil, sesame oil, argan oil, walnut oil, almond oil, babassu oil, shea butter, mango butter, cocoa butter, borage oil, black currant oil, sea-buckhorn oil, macadamia oil, saw palmetto oil, sea-buckhorn berry oil, macadamia oil, saw palmetto oil, rice bran oil and peanut oil. Suitable oils from algae or microalgae include oil obtained from *Schizochytrium* sp. Microbial oils include oils obtained from *Rhodococcus* sp. or *Yarrobia* sp. Suitable fish oils include cod liver oil, mackerel oil, salmon oil and the like Suitable oils also include therapeutic oils, liposoluble pharmaceutical products and/or pharmaceutical compositions stabilised in a lipid phase.

In the first step (i), the method of the invention comprises providing an emulsifier with net positive charge.

"Emulsifier" and "emulgent" are used interchangeably in the present invention to refer to a substance which stabilizes an emulsion by increasing its kinetic stability. In particular, once an emulsion has been established, the emulsifier minimizes phase separation so that the relevant discrete and continuous phases forming the emulsion are maintained.

The term "net charge" means the sum total of the charges of the individual elements. The emulsifier with net positive charge refer to cationic emulsifiers, i.e. emulsifiers which the sum of total of the charges is positive at the studied pH.

Suitable emulsifiers for use in the present invention include, without limitation, proteins, monoglycerides and diglycerides, esters, sucroesters and sucroglycerides, propylenglycol fatty acid esters, polyglyceride fatty acid esters, organic acid mono- and diglycerides esters, polysorbates, fatty acid salts and lecithins.

The term "mono- and diglycerides" refers to a mixture of mono- and diglyceryl esters of long chain, saturated and unsaturated fatty acids that occur in food fats. They contain not less than 30% of α-monoglycerides and may also contain other isomeric monoglycerides, as well as di- and triglycerides, free glycerol, free fatty acids, soap and moisture. They are usually manufactured by the glycerolysis of edible fats and oils, but may also be prepared by esterification of fatty acids with glycerol, with or without molecular distillation of the product. Monoglycerides correspond to the food additive known as E471 according to the FAO/WHO Codex Food Categorization System. Diglycerides correspond to the ingredient known as E473 according to the FAO/WHO Codex Food Categorization System.

The mono- or diglycerol is not particularly limited and any of monoglycerols, diglycerols, polyglycerols, and the like can be used. In addition, the polyglycerol is preferably a polyglycerol of which hydroxyl value is 1,200 or less, and primary hydroxyl groups of all the hydroxyl groups is 50 percent by number or more. Among them, it is desired that the polyglycerol of which primary hydroxyl group is preferably 55 percent by number or more, and more preferably 60 percent by number or more, from the viewpoint of the effects on increasing compatibility between the polyunsaturated fatty acid-containing fat or oil and the basic amino acid and/or the basic peptide, and further the upper limit is, but not particularly limited thereto, 90 percent by number or less, preferably 80 percent by number or less, and more preferably 70 percent by number or less, in order to maximally exhibit the effects thereof. In addition, the hydroxyl value is preferably 1,100 or less, and more preferably 1,000 or less, from the viewpoint of being capable of adjusting hydrophilicity (HLB) of the polyglycerol fatty acid esters depending upon the applications. In addition, the hydroxyl value is preferably 770 or more, from the viewpoint of workability and easiness in esterification with fatty acids.

Monoglycerides suitable for use as emulsifiers in the methods according to the present invention include mono-staryl glycerol, mono-lauryl glycerol, mono-oleyl glycerol, etc. Diglycerides suitable for use according to the present invention include stearyl-oleyl-gliceryde, palmityl-oleiyl-glyceride, dioleyl-glyceride, disteary glycerol, etc.

Sucrose esters or sugar esters (correspond to the food additive known as E473 according to the FAO/WHO Codex Food Categorization System) are defined as mono-, di- and tri-esters of sucrose with fatty acids. Sucrose esters are prepared by reacting sucrose and methyl and ethyl esters of fatty acids or by extraction from sucroglycerides. Since sucrose has a total of eight hydroxyl groups (three are primary groups and five are secondary groups), compounds ranging from sucrose mono- to octa- fatty acids esters can be produced. Although fatty acids in the C8 to C22 range are suitable to esterify sucrose, long chain fatty acids of C14 to C18 are preferred. Such long chain fatty acids include sucrose laurate, sucrose palmitate, sucrose stearate and sucrose oleate. Sucrose esters that have one, two or three fatty acids, or mono, di, and triesters, are referred to as sucrose fatty acid esters (SFAEs). Other sucrose esters that have four or more, up to eight fatty acids esters, are referred to as sucrose polyesters (SPEs). Sucrose fatty acid esters with toxicological clearance have been approved for specific uses in the United States since 1983. The materials approved for food use are mixtures of mono-, di-, and triesters of palmitic and stearic acids. FDA and EC (European Community) standards require a minimum of 80% total content of mono-, di-, and triester to be food approved. Sucrose polyesters with four or more fatty acids are not approved for food use in the United States or EC.

Sucroglycerides (correspond to the food additive E474 according to the FAO/WHO Codex Food Categorization System) consist of a mixture of mono- and di-esters of sucrose and fatty acids together with mono-, di- and triglycerides from the fat or oil.

Propylenglycol fatty acid esters (food additive E477) are defined propylene glycol esters of fatty acids are mixtures of propylene glycol mono- and diesters of saturated and unsaturated fatty acids derived from edible oils and fats (FAO-JEFCA definition). The products are produced either by direct esterification of propylene glycol with fatty acids or by transesterification of propylene glycol with oils or fats. When prepared by transesterification, the product may contain residual mono- and diglycerides and glycerol. The process may be followed by molecular distillation to separate the monoesters.

Polyglycerol esters of fatty acids (food additive E475) are defined as mixed partial esters formed by reacting polymerized glycerols with edible fats, oils, or fatty acids (FAO-JEFCA definition). Minor amounts of mono-, di-, and triglycerides, free glycerol and polyglycerols, free fatty acids, and sodium salts of fatty acids may be present. The polyglycerols vary in degree of polymerization, which is specified by a number (such as tri-) that is related to the average number of glycerol residues per polyglycerol molecule. A specified polyglycerol consists of a distribution of molecular species characteristic of its nominal degree of polymerization. By varying the proportions as well as the nature of the fats or fatty acids to be reacted with the polyglycerols, a large and diverse class of products may be obtained. The article of commerce may be further specified as to saponification value, solidification point of the free fatty acids, iodine value, hydroxyl value and ash content.

Further emulsifiers include compounds belonging to the family of the organic acids mono- and diglycerides esters, which include citric and fatty acids esters of glycerol, acetic and fatty acids esters of glycerol and tartaric, acetic and fatty acid esters of glycerol.

Citric and fatty acids esters of glycerol (food additive E472c) are esters obtained by esterification of glycerol with citric acid and edible fatty acids, or by reaction of a mixture of mono- and diglycerides of edible fatty acid, with citric acid; consists of mixed esters of citric acid and edible fatty acids with glycerol; may contain minor parts of free fatty acids, free glycerol, free citric acid and mono- and diglycerides; may be wholly or partially neutralized with sodium hydroxide or potassium hydroxide (as declared on the label). Their structural formula is 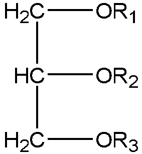 where at least one of R₁, R₂ or R₃ represents a citric acid moiety, one represents a fatty acid moiety and the remainder may represent citric acid, fatty acid or hydrogen.

Acetic and fatty acids esters of glycerol (food additive E472a) are, according to the FAO-JEFCA definition, mixed glycerol esters of acetic acid and fatty acids of food fats. Contains mono- and diesters of fatty acids with glycerol which is itself partially acetylated; may also contain free glycerol and free fatty acids. Their structural formula is 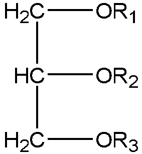 wherein R₁, R₂ and R₃ each may be a fatty acid moiety, - COCH₃ or H but wherein at least one of R₁, R₂ and R₃ is -COCH₃.

Tartaric, acetic and fatty acid esters of glycerol, (food additive, E472e & f) are, according to the FAO/WHO definition, esters of glycerol with fatty acids of food fats, acetic acid and tartaric acid. It may contain small amounts of free glycerol, free fatty acids, free acetic acid, free tartaric acid and free glycerides. Their structural formula is: 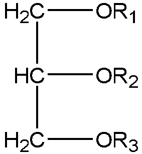 wherein one or two of the R groups is a fatty acid moiety and the other R groups are either a tartaric acid moiety, an acetic acid moiety, hydrogen- diacetylated tartaric acid moiety or monoacetylated tartaric acid moiety.

Calcium, potassium and sodium salts of fatty acid (food additive E470), FAO-JEFCA definition: these products consist of calcium, potassium or sodium salts of commercial myristic, oleic, palmitic, stearic, acids or mixtures of these acids from edible fats and oils.

The term "lecithin", as used herein, refers to any mixture of one or more glycerophospholipids. Lecithin can be obtained as a mixture of phosphatides and triglycerides by water-washing crude vegetable oils, and separating and drying the resulting hydrated gums. A refined product can be obtained by fractionating the mixture for acetone insoluble phospholipids and glycolipids remaining after removal of the triglycerides and vegetable oil by acetone washing. Alternatively, lecithin can be obtained from various commercial sources.

Suitable proteins for use as emulsifiers in the method of the invention include vegetable proteins or animal proteins, as well as, fermented and/or hydrolysed proteins.

Suitable vegetable proteins for use as emulsifiers in the method of the invention include pea protein, rice protein, lentil protein, chickpea protein, potato protein, oak protein, soy protein, wheat protein, rye protein, barley protein, oat protein, corn protein, lupine protein, sorghum protein, quinoa protein, canola protein, fava bean protein, mung bean protein, navy bean protein, peanut protein, sunflower protein and almond protein.

Suitable animal proteins for use as emulsifiers in the method of the invention include collagen, gelatine, casein and whey proteins.

In a particular embodiment, the emulsifier with net positive charge in the oil-in-water (o/w) emulsion is selected from the group consisting of: monoglycerides and diglycerides, esters, sucroesters and sucroglycerides, propylenglycol fatty acid esters, polyglyceride fatty acid esters, organic acid mono- and diglycerides esters, polysorbates, fatty acid salts, lecithins, denatured or not, hydrolysed or not vegetable protein as pea protein, rice protein, lentil protein, chickpea protein, potato protein, oak protein, soy protein, wheat protein, rye protein, barley protein, oat protein, corn protein, lupine protein, sorghum protein, quinoa protein, canola protein, fava bean protein, mung bean protein, navy bean protein, peanut protein, sunflower protein, almond protein; denatured or not, hydrolysed or not protein from animal origin as collagen, gelatine, casein and whey proteins; and fermented protein as a soy-based fermented protein, a dairy-based fermented protein, a grain-based fermented protein and a legume-based fermented protein or protein isolate fractions including prolamins or prolamins and glutelins mixture as gliadin, glutenin, gluten, orzanin, hordein, secalin, zein, kafirin and avenin and combinations thereof.

The term "denatured proteins" refers to proteins that have lost their native three-dimensional structure due to external stress or conditions, such as changes in temperature, pH, or the presence of certain chemicals. Denaturation disrupts the noncovalent interactions (such as hydrogen bonds, ionic bonds, hydrophobic interactions, and van der Waals forces) that stabilize the protein's structure, causing it to unfold or change its shape.

The term "hydrolysed proteins" refers to proteins that have been broken down into smaller peptides or amino acids through a process called hydrolysis. This process involves cleaving the peptide bonds that link amino acids in the protein's structure, typically by the action of water in the presence of enzymes, acids, or alkalis.

The term "fermented proteins" refers to proteins that have undergone fermentation, a process where microorganisms like bacteria, yeast, or fungi break down the protein or other components in the food. During fermentation, these microorganisms produce enzymes that can modify or break down the proteins into smaller peptides, amino acids, or other bioactive compounds, often enhancing the protein's nutritional, digestibility, and functional properties.

The term "prolamins" refer to a group of plant storage proteins that are high in the amino acids proline and glutamine. They are found mainly in the seeds of cereal grains, like wheat, barley, rye, and corn. The term "glutelins" refer to a group of plant storage proteins found in the seeds of cereal grains. They are soluble in dilute acids or bases and are relatively insoluble in water and alcohol. These proteins are primarily located in the endosperm of grains and, along with prolamins, form the main components of gluten in wheat.

In a more particular embodiment, the emulsifier with net positive charge is pea protein, lentil protein, chickpea protein, potato protein or gelatine.

The emulsifier content in the mixture is not particularly limiting as long as the aqueous solution comprising the hydrocolloid and the emulsifier form an o/w emulsion. In some embodiments, the emulsifier with net positive charge content in the mixture is of between 0.01 and 35% (w/w). In additional embodiments, the emulsifier with net positive charge content in the mixture is of between 0.01 and 30% (w/w). In additional embodiments, the emulsifier with net positive charge content in the mixture is of between 0.01 and 25% (w/w). In additional embodiments, the emulsifier with net positive charge content in the mixture is of between 0.1 and 20% (w/w). In additional embodiments, the emulsifier with net positive charge content in the mixture is of between 0.1 and 15% (w/w). In additional embodiments, the emulsifier with net positive charge content in the mixture is of between 0.1 and 14 % (w/w). In additional embodiments, the emulsifier with net positive charge content in the mixture is of between 0.1 and 13% (w/w). In additional embodiments, the emulsifier with net positive charge content in the mixture is of between 0.1 and 12 % (w/w). In additional embodiments, the emulsifier with net positive charge content in the mixture is of between 0.1 and 11 % (w/w). In additional embodiments, the emulsifier with net positive charge content in the mixture is of between 0.1 and 10.5 % (w/w). In a preferred embodiment, the emulsifier with net positive charge content in the mixture is of between 0.1 and 10 % (w/w).

In another particular embodiment, the emulsifier used in the method of the invention has a molecular weight (kDa) of between 4 and 1000 kDa, preferably between 5 and 900 kDa, more preferably between 10 and 800 kDa.

In some embodiments, the "emulsifier content" refers to the total content of emulsifier in the mixture. In other embodiments, the "emulsifier content" refers to the content of each emulsifier.

In a particular embodiment, the weight ratio of emulsion to hydrocolloid is of 0.01:1 to 2:1. In a more particular embodiment, the weight ratio of emulsion to hydrocolloid is 0.01:1. In another more particular embodiment, the weight ratio of emulsion to hydrocolloid is 0.1:1. In another more particular embodiment, the weight ratio of emulsion to hydrocolloid is 0.5:1. In another more particular embodiment, the weight ratio of emulsion to hydrocolloid is 1:1. In another more particular embodiment, the weight ratio of emulsion to hydrocolloid is 1.5:1. In another more particular embodiment, the weight ratio of emulsion to hydrocolloid is 2:1.

In another particular embodiment, the weight ratio of emulsion to polymer is of 10:1 to 1:5. In a more particular embodiment, the weight ratio of emulsion to polymer is 10:1.ln another more particular embodiment, the weight ratio of emulsion to polymer is 5:1. In another more particular embodiment, the weight ratio of emulsion to polymer is 2:1. In another more particular embodiment, the weight ratio of emulsion to polymer is 1:1. In another more particular embodiment, the weight ratio of emulsion to polymer is 1:2. In another more particular embodiment, the weight ratio of emulsion to polymer is 1:5.

In one embodiment, the method comprises the use of a single emulsifier and a single hydrocolloid. In other embodiment, the method comprises the use of an emulsifier and a first and second hydrocolloid, wherein the second hydrocolloid is preferably a co-emulsifier. In yet another embodiment, the method comprises the use of an emulsifier, a first hydrocolloid, a second hydrocolloid and an additional hydrocolloid. Suitable emulsifiers, first hydrocolloids, second hydrocolloids and additional hydrocolloids are as defined above.

In some embodiments, the oil, the emulsifier with net positive charge, the first, the second and any additional hydrocolloids with net negative charge are natural ingredients.

In the present description, what is meant by "natural ingredients" is ingredients of natural origin. These include ingredients which come directly from the field, etc. They may also include ingredients which are the result of a physical or microbiological/enzymatic process (e.g. extraction, fermentation etc.). However, they do not include ingredients which are the result of a chemical modification process. In another embodiment, the natural ingredients derive from a non-animal source, preferably a plant source, an algal source or a microbial source.

In other embodiments, the oil, the emulsifier with net positive charge, the first, the second and any additional hydrocolloids with net negative charge are synthetic, semi-synthetic ingredients or a blend.

In a particular embodiment, the oil, the emulsifier with net positive charge, the first and the second hydrocolloids and any additional hydrocolloids with net negative charge are from a non-animal source, preferably a plant source, an algal source, a microalgal source or a microbial source.

In another particular embodiment, the oil, the emulsifier with net positive charge, the first and the second hydrocolloids and any additional hydrocolloids with net negative charge are from an animal source.

In another particular embodiment, the oil comprises a vegetable oil, an algal oil, a microalgal oil, and animal oil and/or a microbial oil. In another particular embodiment, the oil optionally comprises a compound which is soluble in oil or dispersible in oil. In a more particular embodiment, the oil comprises an algal oil or a microalgal oil. In a preferred embodiment, the oil is an omega-3 rich algal oil or microalgal oil.

In the second step (ii) of the method of the invention the o/w emulsion is contacted with a polymer wherein said contacting is carried out under pH conditions that results in that the net charge of the polymer is positive and under conditions that allow the load binding of the polymer and hydrocolloid into microparticles containing a core region formed by the emulsion and a polymer shell.

The term "polymer" as used herein refers to a macromolecule formed by the repetition of smaller units called monomers, linked by covalent bonds. Polymers can be of natural, synthetic or semi-synthetic origin, with linear or branched structures, and are classified as homopolymers (repetition of the same unit) or heteropolymers/copolymers (repetition of different units). Monomers can be based on sugars, amino acids or their derivatives and altered forms, which determine the chemical and physical properties of the polymer.

In a particular embodiment, the polymer with net positive charge used in step (ii) or the additional polymer is a natural polymer. In a particular embodiment, the natural polymer has a plant origin, a microbial origin or an animal origin. In another particular embodiment, the polymer with net positive charge is a synthetic polymer.

In a more particular embodiment, the polymer with net positive charge used in step (ii) or the additional polymer is selected from the group consisting of chitosan, hyaluronic acid, chondroitin sulphate, chitin or a denatured or hydrolysed vegetable, animal or microbial protein selected from: albumin, casein, gelatine, collagen, apolipoprotein, pea protein, rice protein, lentil protein, chickpea protein, potato, oak, soy protein, wheat protein, rye protein, barley protein, oat protein, corn protein, lupine, sorghum, quinoa, canola, fava bean, mung bean, navy bean, peanut, sunflower and almond, or protein isolate fractions including prolamins or prolamins and glutelins mixture as gliadin, glutenin, gluten, orzanin, hordein, secalin, zein, kafirin and avenin and combinations thereof.

In a more particular embodiment, the polymer with net positive charge used in step (ii) of the method of the invention or the additional polymer is chitosan, wheat protein, pea protein, lentil protein, chickpea protein, gluten or zein.

In a particular embodiment, the polymer used in step (ii) or the additional polymer is at a ratio between 0.01 and 15 % (w/w). In additional embodiments, the polymer is at a ratio between 0.01 and 13 % (w/w). In additional embodiments, the polymer is at a ratio between 0.01 and 12 % (w/w). In additional embodiments, the polymer is at a ratio between 0.01 and 11 % (w/w). In additional embodiments, the polymer is at a ratio between 0.01 and 10 % (w/w). In a preferred embodiment, the polymer is at a ratio of between 0.05 and 10 % (w/w).

In another particular embodiment, the polymer(s) used in the method of the invention have a molecular weight (kDa) of between 10 and 2000 kDa, preferably between 20 and 1000 kDa, more preferably between 40 and 1000 kDa.

In the second step (ii) of the method of the invention the pH conditions are those that results in that the net charge of the polymer is positive. In a particular embodiment, the pH conditions in step (ii) are acidic conditions and the acidic conditions result from the addition of an acid to the emulsion.

In a particular embodiment, the acid content is of between 0.01 and 10% by weight. In a more particular embodiment, the acid content is of between 0.05 and 7% by weight. In a still more particular embodiment, the acid content is of between 0.1 and 5% by weight.

In another particular embodiment, the acid is selected from the group consisting of: lactic acid, citric acid, acetic acid, malic acid, ascorbic acid, tartaric acid, benzoic acid and sorbic acid.

In a more particular embodiment, the acid is lactic acid, citric acid or malic acid.

In another particular embodiment, the pH of step (ii) in the method of the invention is of between 2 and 6.

In the second step (ii) of the method of the invention, the o/w emulsion is contacted with a polymer under conditions that allow the load binding of the polymer and hydrocolloid into microparticles containing a core region formed by the emulsion and a polymer shell.

In a particular embodiment, the o/w emulsion is contacted with a polymer under conditions that allow the binding of the polymer and hydrocolloid into microparticles containing a core region formed by the emulsion and a polymer shell.

Step (iii) of the method of the invention consists of the stabilization of the polymer leading to stabilized microparticles. Additional step (iv) of the method of the invention comprises the stabilization of the additional polymer leading to the formation of an additional stabilized layer. Stabilization refers to the process of improving the physical, chemical or mechanical properties of a particle during its manufacture by cross-linking its molecular components. This process strengthens the internal structure of the particle, increasing its resistance to physical treatments (such as heat or pressure) and its chemical stability, such as increased resistance to oxidation or degradation compared to the original, nonstabilized sample. Stabilization aims to prolong the functionality and durability of the material against adverse external conditions. The stability of the microparticles can be measured after fabrication or after a treatment of high temperature, shearing or pressure. The stability of the capsules is measured as follows. The microparticles are re-dispersed, centrifugated and the supernatant is collected. The turbidity of the supernatant is measurement to assess the ability of the particles to maintain their integrity after processing. A clear supernatant (no turbidity) indicates that the microparticles retain their structure and are stable. Whereas when the particles do break up, small particles and oil droplets may come out of the capsule and turbidity increases. The turbidity was measured using a HI 98713 according to ISO 7027 method from 0,00 to 1000 FNU (Formazin Nephelometric Units).

In a particular embodiment, the stabilization in step (iii) or the stabilization of the additional polymer is carried out by physical means.

In a more particular embodiment, the stabilization in step (iii) or the stabilization of the additional polymer is by physical means selected from heat, UV irradiation, vacuum and freeze-drying.

In another particular embodiment, the stabilization in step (iii) or the stabilization of the additional polymer is carried out by chemical means.

In a more particular embodiment, the stabilization in step (iii) or the stabilization of the additional polymer is achieved chemically by inducing ionic or covalent interactions between the polymer molecules.

Ionic interactions involve the attraction of ions or molecules with full permanent charges of opposite signs whereas a covalent interaction refers to a physical connection between two atoms or radicals in which a chemical bond is formed by sharing electrons.

In a particular embodiment, the ionic interactions are induced by a polyphosphate salt, a phosphate salt, a divalent acid or a salt thereof, vanillin or tannic acid.

In a more particular embodiment, the ionic interactions are induced by a polyphosphate salt, preferably sodium hexametaphosphate, sodium tripolyphosphate (TPP), vanillin or citric acid.

A polyphosphate is a salt or ester of polymeric oxyanions formed from tetrahedral PO₄ (phosphate) structural units linked together by sharing oxygen atoms. TPP is an inorganic compound with formula Na₅P₃O₁₀. It is the sodium salt of the polyphosphate penta-anion, which is the conjugate base of triphosphoric acid.

In another particular embodiment, the covalent interactions are created using a crosslinker.

As used herein, the term "cross-linking" and/or "polymerization" refers to at least one reaction that consumes at least one functional group in one polymer molecule to create at least one chemical linkage between at least two distinct polymer molecules. In the majority of cases, a cross-link is a covalent structure or covalent bond, but the term may also describe sites of weaker chemical interactions, portions of crystallites, and even physical interactions and entanglements. The cross-linking can alter the physical and mechanical properties of the polymer. Cross-linking may be formed by chemical reactions that are initiated by heat, pressure, change in pH, and/or radiation, with or without the presence of a cross-linking agent and/or catalyst. A polymerization or cross-linking reaction may consume between about 0 percent and about 100 percent of the at least one functional group available in the system. The "cross-linker" is the chemical used to create a cross-linked polymer.

In a particular embodiment, the cross-linker is selected from the group consisting of: a transglutaminase, an aldehyde, a carbodiimide and genipin.

In another particular embodiment, the method of the invention is carried out at a temperature of between 1°C and 60°C, preferably at a temperature of between 1°C and 50°C, more preferably at a temperature of between 1°C and 40°C.

In a preferred embodiment, the method of the invention is carried out at a temperature of between 1°C and 35°C. In a more preferred embodiment, the method is carried out at a temperature of between 18°C and 26°C.

In a particular embodiment, the temperature of between 1°C and 35°C, preferably between 18°C and 26°C, is maintained during all the steps (i), (ii) and (iii) of the method of the invention.

In another particular embodiment, the temperature of between 1°C and 35°C, preferably between 18°C and 26°C, is maintained during step (i) of the method of the invention.

In another particular embodiment, the temperature of between 1°C and 35°C, preferably between 18°C and 26°C, is maintained during step (i) and step (ii) of the method of the invention.

In another particular embodiment, the temperature of between 1°C and 35°C, preferably between 18°C and 26°C, is maintained during step (ii) of the method of the invention.

In another particular embodiment, the temperature of between 1°C and 35°C, preferably between 18°C and 26°C, is maintained during step (iii) of the method of the invention.

In another particular embodiment, the temperature of between 1°C and 35°C, preferably between 18°C and 26°C, is maintained during step (i) and step (iii) of the method of the invention.

In another particular embodiment, the temperature of between 1°C and 35°C, preferably between 18°C and 26°C, is maintained during step (ii) and step (iii) of the method of the invention.

In another particular embodiment, the temperature of between 1°C and 35°C, preferably between 18°C and 26 °C, is maintained during step (iv), i.e. during the formation of one or more additional stabilized polymer layers around the shell of the microparticle.

In another embodiment, the method according to the present invention involves the use of one or more aqueous solutions or oil which comprises or comprise one or more additives. In a particular embodiment, the lipid or water phase contain one or more additives. In a preferred embodiment, the additive is a food additive.

The term "food additive", refers to an essentially pure compound or a multi component composition intended for or suitable for being added to food or feed. In particular it is a substance that by its intended use is becoming a component of a food or feed product or affects any characteristics of a food or feed product.

In a particular embodiment, the additive is selected from the group consisting of preservatives, antifreeze agents, cryoprotective agents, aroma or flavouring compounds, food dyes, salts, sweeteners, pH regulators, chelators and antioxidants.

Preservative is a substance or a chemical that is added to products such as food products, beverages, pharmaceutical drugs, paints, biological samples, cosmetics, wood, and many other products to prevent decomposition by microbial growth or by undesirable chemical changes. The preservative is chosen from antimicrobials, antienzymatics or combinations thereof. Non-limiting examples of antimicrobials include sulfites, propionates, benzoates, sorbates, nitrates, nitrites, bacteriocins, salts, sugars, acetic acid, dimethyl dicarbonate (DMDC), ethanol, and ozone.

Suitable antifreeze agents and/or a cryoprotective agents include, within limitation, glycerol as antifreeze agent and inverted sugar as cryoprotectant. Suitable agents having antifreeze and/or a cryoprotective activity include propylenglycol, sorbitol, sucrose, glucose, trehalose, hydroxyethyl starch, guar gum and the like.

The term "aroma", "flavouring compound" or "flavorant", as used herein, has the usual meaning in the art in that it is a compound that imparts a hedonic effect, i.e. is able to impart or modify in a pleasant way the taste of a preparation, and not just as imparting a taste, it also includes sweeteners. The term includes both flavouring compounds as such as well as flavour precursors. i.e. compounds that are converted into flavouring compounds when the food is further process, i.e. by heating.

In a particular embodiment, the lipid or water phase contain an aroma, preferably bacon aroma.

Suitable flavouring compounds include sugars, sugar alcohols, sugar derivatives, free fatty acids, triglycerides, alpha-hydroxy acids, dicarboxylic acids, amino acids and derivatives thereof, nucleosides, nucleotides, vitamins, peptides, phospholipids, lecithin, pyrazine, creatine, pyrophosphate and organic molecules. For example, sugars, sugar alcohols, sugar acids, and sugar derivatives can include glucose, fructose, ribose, sucrose, arabinose, glucose-6-phosphate, fructose-6-phosphate, fructose 1,6-diphosphate, inositol, maltose, mannose, glycerol, molasses, maltodextrin, glycogen, galactose, lactose, ribitol, gluconic acid, glucuronic acid, amylose, amylopectin, or xylose. Free fatty acids can include caprylic acid, capric acid, lauric acid, myristic acid, palmitic acid, palmitoleic acid, stearic acid, oleic acid, linoleic acid, alpha linolenic acid, gamma linolenic acid, arachidic acid, arachidonic acid, behenic acid, eicosapentaenoic acid, petroselinic acid or erucic acid. Triglycerides can include fatty acid esters of caprylic acid, capric acid, lauric acid, myristic acid, palmitic acid, palmitoleic acid, stearic acid, oleic acid, linoleic acid, alpha linolenic acid, gamma linolenic acid, arachidic acid, arachidonic acid, behenic acid, eicosapentaenoic acid, petroselinic acid or erucic acid. Amino acids and derivatives thereof can include cysteine, cystine, a cysteine sulfoxide, allicin, selenocysteine, methionine, isoleucine, leucine, lysine, phenylalanine, threonine, tryptophan, 5-hydroxytryptophan, valine, arginine, histidine, alanine, asparagine, aspartate, glutamate, glutamine, glycine, proline, serine, tyrosine, ornithine, carnosine, citrulline, carnitine, ornithine, theanine, and taurine. Phospholipids can include a plurality of amphipathic molecules comprising fatty acids, glycerol and polar groups. The fatty acids are selected from the group consisting of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, conjugated oleic acid, or esters of: oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or glycerol esters of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid, or triglyceride derivatives of oleic acid, palmitoleic acid, palmitic acid, myristic acid, lauric acid, myristoleic acid, caproic acid, capric acid, caprylic acid, pelargonic acid, undecanoic acid, linoleic acid, 20:1 eicosanoic acid, arachidonic acid, eicosapentanoic acid, docosohexanoic acid, 18:2 conjugated linoleic acid, or conjugated oleic acid. In some embodiments, the polar groups are selected from the group consisting of choline, ethanolamine, serine, phosphate, glycerol-3-phosphate, inositol and inositol phosphates.

The term "food dye", as used herein, refers to compounds that imparts colour when it is added to food or drink. The term includes natural colouring agents such as turmeric or beet juice, annatto (E160b), caramel colouring (E150a-d), carmine (E120), elderberry juice (E163), lycopene (E160d), paprika (E160c) and turmeric (E100) as well as artificial colouring agents such as an azo dye, triphenylmethane, xanthene, quinine, indigoid, titanium dioxide, red #3, red #40, blue #1, or yellow #5, or any combination of natural and/or artificial colouring agents.

As used herein "salts" refer to chemical compounds consisting of an ionic assembly of cations and anions and are added to food to preserve flavour or enhance taste, appearance, or other sensory qualities. Non limiting examples of salts include sodium phosphates, potassium phosphates, calcium phosphates, ammonium phosphates, magnesium phosphates, sodium chloride and potassium chloride. In a particular embodiment the salt of the invention is sodium chloride, potassium chloride of a combination thereof. The term "sweeteners", as used herein, include, without limitation sorbitol, mannitol, Acesulfame K, Sucralose, Saccharines, Aspartame, Cyclamates, Isomaltose, Taumatine, Neohesperidine DC, Neotame, Aspartame and Acesulfame salts, Maltitol, Lactitol, Xylitol, Erythritol.

The term "pH regulator" or "acidity regulator" refers to food additives added to change or maintain pH (acidity or basicity). They can be organic or mineral acids, bases, neutralizing agents, or buffering agents. Commonly used acidity regulators are citric, acetic and lactic acids. Suitable pH regulators include, without limitation lactic acid, adipic acid, monosodium fumarate, fumaric acid, malic acid, citric acid, metatartaric acid, tartaric acid, hydrochoric acid, acetic acid, sodium sesquicarbonate, sodium carbonate, potassium carbonate, potassium hydrogen carbonate, potassium hydroxide, calcium hydroxide, calcium lactate, sodium dihydrogen citrate, trisodium citrate, tripotassium citrate, calcium hydrogen phosphate, sodium tripolyphosphate, sodium polyphosphate, tripatossium orthophosphate, trisodium orthophosphate, tricalcium orthophosphate, sodium dihydrogen phosphate, diammonium hydrogen phosphate, potassium dihydrogen phosphate, sodium dihydrogen phosphate, potassium dihydrogen phosphate, calcium dihydrogen phosphate, tetrasodium pyrophosphate, disodium dihydrogen pyrophosphate and phosphoric acid.

In order to reduce the oxidation, the additive can be one or more antioxidant compound or a composition comprising antioxidant compounds.

The term "antioxidant" refers to a substance that inhibits or slows down the oxidation process, which can damage cells and other molecules in the body. Oxidation is a chemical reaction that produces free radicals, unstable molecules that can damage cellular structures like DNA, proteins, and lipids. Antioxidants neutralize free radicals, preventing or minimizing this damage and playing a crucial role in maintaining health and preventing certain diseases.

Examples of suitable antioxidants for embodiments of this application include, but are not limited to, vitamins, vitamin cofactors, minerals, hormones, carotenoids, carotenoid terpenoids, non-carotenoid terpenoids, flavonoids, flavonoid polyphenolics (e.g., bioflavonoids), flavonols, flavones, phenols, polyphenols, esters of phenols, esters of polyphenols, nonflavonoid phenolics, isothiocyanates, and combinations thereof. In some embodiments, the antioxidant is vitamin A, vitamin C, vitamin E, ubiquinone, mineral selenium, manganese, melatonin, α-carotene, β-carotene, lycopene, lutein, zeanthin, crypoxanthin, reservatol, eugenol, quercetin, catechin, gossypol, hesperetin, curcumin, ferulic acid, thymol, hydroxytyrosol, tumeric, thyme, olive oil, lipoic acid, glutathinone, gutamine, oxalic acid, tocopherol-derived compounds, butylated hydroxyanisole (BHA), butylated hydroxytoluene (BHT), ethylenediaminetetraacetic acid (EDTA), tert-butylhydroquinone, acetic acid, pectin, tocotrienol, tocopherol, coenzyme Q10, zeaxanthin, astaxanthin, canthaxantin, saponins, limonoids, kaempfedrol, myricetin, isorhamnetin, proanthocyanidins, quercetin, rutin, luteolin, apigenin, tangeritin, hesperetin, naringenin, erodictyol, flavan-3-ols (e.g., anthocyanidins), gallocatechins, epicatechin and its gallate forms, epigallocatechin and its gallate forms (ECGC) theaflavin and its gallate forms, thearubigins, isoflavone, phytoestrogens, genistein, daidzein, glycitein, anythocyanins, cyaniding, delphinidin, malvidin, pelargonidin, peonidin, petunidin, ellagic acid, gallic acid, salicylic acid, rosmarinic acid, cinnamic acid and its derivatives (e.g., ferulic acid), chlorogenic acid, chicoric acid, gallotannins, ellagitannins, anthoxanthins, betacyanins and other plant pigments, silymarin, citric acid, lignan, antinutrients, bilirubin, uric acid, R-a-lipoic acid, N-acetylcysteine, emblicanin, apple extract, apple skin extract (applephenon), rooibos extract red, rooibos extract, green, hawthorn berry extract, red raspberry extract, green coffee antioxidant (GCA), aronia extract 20 percent, grape seed extract (VinOseed), cocoa extract, hops extract, mangosteen extract, mangosteen hull extract, cranberry extract, pomegranate extract, pomegranate hull extract, pomegranate seed extract, hawthorn berry extract, pomella pomegranate extract, cinnamon bark extract, grape skin extract, bilberry extract, pine bark extract, pycnogenol, elderberry extract, mulberry root extract, wolfberry (gogi) extract, blackberry extract, blueberry extract, blueberry leaf extract, raspberry extract, turmeric extract, citrus bioflavonoids, black currant, ginger, acai powder, green coffee bean extract, green tea extract, rosemary extract and phytic acid, or combinations thereof. In alternate embodiments, the antioxidant is a synthetic antioxidant such as butylated hydroxytolune or butylated hydroxyanisole, for example. Other sources of suitable antioxidants for embodiments of this application include, but are not limited to, fruits, vegetables, tea, cocoa, chocolate, spices, herbs, rice, organ meats from livestock, yeast, whole grains, or cereal grains.

Particular antioxidants belong to the class of phytonutrients called polyphenols (also known as "polyphenolics"), which are a group of chemical substances found in plants, characterized by the presence of more than one phenol group per molecule. Suitable polyphenols for embodiments of this application include catechins, proanthocyanidins, procyanidins, anthocyanins, quercetin, rutin, resveratrol, isoflavones, curcumin, punicalagin, ellagitannin, hesperidin, naringin, citrus flavonoids, chlorogenic acid, other similar materials, and combinations thereof.

In particular embodiments, the antioxidant is a catechin such as, for example, epigallocatechin gallate (EGCG). Suitable sources of catechins for embodiments of this application include, but are not limited to, green tea, white tea, black tea, oolong tea, chocolate, cocoa, red wine, grape seed, red grape skin, purple grape skin, red grape juice, purple grape juice, berries, pycnogenol, and red apple peel.

In some embodiments, the antioxidant is chosen from proanthocyanidins, procyanidins or combinations thereof. Suitable sources of proanthocyanidins and procyanidins for embodiments of this application include, but are not limited to, red grapes, purple grapes, cocoa, chocolate, grape seeds, red wine, cacao beans, cranberry, apple peel, plum, blueberry, black currants, choke berry, green tea, sorghum, cinnamon, barley, red kidney bean, pinto bean, hops, almonds, hazelnuts, pecans, pistachio, pycnogenol, and colourful berries.

In particular embodiments, the antioxidant is an anthocyanin. Suitable sources of anthocyanins for embodiments of this application include, but are not limited to, red berries, blueberries, bilberry, cranberry, raspberry, cherry, pomegranate, strawberry, elderberry, choke berry, red grape skin, purple grape skin, grape seed, red wine, black currant, red currant, cocoa, plum, apple peel, peach, red pear, red cabbage, red onion, red orange, and blackberries.

In some embodiments, the antioxidant is chosen from quercetin, rutin or combinations thereof. Suitable sources of quercetin and rutin for embodiments of this application include, but are not limited to, red apples, onions, kale, bog whortleberry, lingonberrys, chokeberry, cranberry, blackberry, blueberry, strawberry, raspberry, black currant, green tea, black tea, plum, apricot, parsley, leek, broccoli, chili pepper, berry wine, and ginkgo.

In some embodiments, the antioxidant is resveratrol. Suitable sources of resveratrol for embodiments of this application include, but are not limited to, red grapes, peanuts, cranberry, blueberry, bilberry, mulberry, Japanese Itadori tea, and red wine.

In particular embodiments, the antioxidant is an isoflavone. Suitable sources of isoflavones for embodiments of this application include, but are not limited to, soy beans, soy products, legumes, alfalfa sprouts, chickpeas, peanuts, and red clover.

In some embodiments, the antioxidant is curcumin. Suitable sources of curcumin for embodiments of this application include, but are not limited to, turmeric and mustard.

In particular embodiments, the antioxidant is chosen from punicalagin, ellagitannin or combinations thereof. Suitable sources of punicalagin and ellagitannin for embodiments of this application include, but are not limited to, pomegranate, raspberry, strawberry, walnut, and oak-aged red wine.

In some embodiments, the antioxidant is a citrus flavonoid, such as hesperidin or naringin. Suitable sources of citrus flavonoids, such as hesperidin or naringin, for embodiments of this application include, but are not limited to, oranges, grapefruits, and citrus juices.

In particular embodiments, the antioxidant is chlorogenic acid. Suitable sources of chlorogenic acid for embodiments of this application include, but are not limited to, green coffee, yerba mate, red wine, grape seed, red grape skin, purple grape skin, red grape juice, purple grape juice, apple juice, cranberry, pomegranate, blueberry, strawberry, sunflower, Echinacea, pycnogenol, and apple peel.

It will be understood that the antioxidant or antioxidants may be added once it has been prepared or can be included in one of the phases used in the preparation of the stabilized microparticle. The incorporation of the antioxidant in the aqueous phase or in the lipid phase will depend on the solubility of the antioxidant in each of the phases.

In a preferred embodiment, the additive is an antioxidant. In a more preferred embodiment, the antioxidant is rosemary extract and/or tocopherols.

In a particular embodiment, the method of the invention comprises the use of chickpea protein as emulsifier with net positive charge, arabic gum as hydrocolloid with net negative charge, algae oil, chitosan as polymer and sodium tripolyphosphate (TPP) as stabilizer.

In a particular embodiment, the content of arabic gum-chickpea protein solution is of between 5-30% w/w.

In another particular embodiment, the content of chitosan is of between 0.5-5% w/w.

In another particular embodiment, the content of TPP is of between 0.1-10% w/w.

In a preferred embodiment, the method of the invention is carried out using arabic gum as hydrocolloid, chickpea protein as emulsifier, algae oil and chitosan as polymeric shell and sodium tripolyphosphate as stabilizer.

In another particular embodiment, the method of the invention comprises the use of lentil protein as emulsifier with net positive charge, arabic gum as hydrocolloid with net negative charge, alginate as second hydrocolloid, preferably as co-emulsifier, chitosan as polymer, microalgae oil and sodium tripolyphosphate (TPP) as stabilizer.

In a particular embodiment, the content of arabic gum-lentil protein-alginate solution is of between 5-30% w/w.

In another particular embodiment, the content of chitosan is of between 0.5-5% w/w.

In another particular embodiment, the content of TPP is of between 0.1-10% w/w.

In a preferred embodiment, the method of the invention is carried out using arabic gum as hydrocolloid, lentil protein as emulsifier, alginate as second hydrocolloid, preferably as co-emulsifier, microalgae oil and chitosan as polymeric shell and sodium tripolyphosphate as stabilizer.

In another particular embodiment, the method of the invention comprises the use of pea protein as emulsifier with net positive charge, arabic gum as hydrocolloid with net negative charge, xanthan gum as second hydrocolloid, preferably as co-emulsifier, microalgae oil, chitosan as polymer, sodium tripolyphosphate (TPP) as stabilizer and tocopherols and rosemary extract as antioxidants.

In a particular embodiment, the content of arabic gum-pea protein-xanthan gum solution is of between 5-30% w/w.

In another particular embodiment, the content of chitosan is of between 0.5-5% w/w.

In another particular embodiment, the content of TPP is of between 0.1-10% w/w.

In a preferred embodiment, the method of the invention is carried out using arabic gum as hydrocolloid, pea protein as emulsifier, xanthan gum as second hydrocolloid, preferably as co-emulsifier, microalgae oil and chitosan as polymeric shell, sodium tripolyphosphate as stabilizer, and tocopherols and rosemary extract as antioxidants.

In another particular embodiment, the method of the invention comprises the use of pea protein as emulsifier with net positive charge, arabic gum as hydrocolloid with net negative charge, xanthan gum as second hydrocolloid, preferably as co-emulsifier, algae oil, gluten as polymer and sodium tripolyphosphate (TPP) as stabilizer.

In a particular embodiment, the content of arabic gum-pea protein-xanthan gum solution is of between 5-30% w/w.

In another particular embodiment, the content of gluten is of between 0.5-5% w/w.

In another particular embodiment, the content of TPP is of between 0.1-10% w/w.

In a preferred embodiment, the method of the invention is carried out using arabic gum as hydrocolloid, pea protein as emulsifier, xanthan gum as second hydrocolloid, preferably as co-emulsifier, algae oil and gluten as polymeric shell and sodium tripolyphosphate as stabilizer.

In another particular embodiment, the method of the invention comprises the use of potato protein as emulsifier with net positive charge, arabic gum as hydrocolloid with net negative charge, alginate as second hydrocolloid, preferably as co-emulsifier, algae oil, gluten as polymer and transglutaminase as stabilizer.

In a particular embodiment, the content of arabic gum-potato protein-alginate solution is of between 5-30% w/w.

In another particular embodiment, the content of gluten is of between 0.5-5% w/w.

In another particular embodiment, the content of transglutaminase is of between 0.1-10% w/w.

In a preferred embodiment, the method of the invention is carried out using arabic gum as hydrocolloid, potato protein as emulsifier, alginate as second hydrocolloid, preferably as co-emulsifier, algae oil and gluten as polymeric shell and transglutaminase as stabilizer.

In another particular embodiment, the method of the invention comprises the use of lentil protein as emulsifier with net positive charge, arabic gum as hydrocolloid with net negative charge, alginate as second hydrocolloid, preferably as co-emulsifier, algae oil, chitosan as polymer and sodium tripolyphosphate (TPP) as a stabilizer. In some embodiments, chitosan and TPP are used as additional polymer and additional stabilizer to obtain a microparticle comprising additional stabilized polymer layers around the shell of the microparticle.

In a particular embodiment, the content of arabic gum-lentil protein-alginate solution is of between 5-30% w/w.

In another particular embodiment, the content of chitosan is of between 0.5-5% w/w.

In another particular embodiment, the content of TPP is of between 0.1-10% w/w.

In a preferred embodiment, the method of the invention is carried out using arabic gum as hydrocolloid, lentil protein as emulsifier, alginate as second hydrocolloid, preferably as co-emulsifier, algae oil and chitosan as polymeric shell and sodium tripolyphosphate as stabilizer. In a more preferred embodiment, chitosan and TPP are used to obtain additional stabilized polymer layers around the shell of the microparticle.

In another particular embodiment, the method of the invention comprises the use of lentil protein as emulsifier with net positive charge, arabic gum as hydrocolloid with net negative charge, alginate as second hydrocolloid, preferably as co-emulsifier, microalgae oil, chitosan as polymer, sodium tripolyphosphate (TPP) as first stabilizer, gluten as additional polymer and transglutaminase as second stabilizer. In some embodiments, gluten and transglutaminase are used to obtain a microparticle comprising additional stabilized polymer layers around the shell of the microparticle.

In a particular embodiment, the content of arabic gum-lentil protein-alginate solution is of between 5-30% w/w.

In another particular embodiment, the content of chitosan is of between 0.5-5% w/w.

In another particular embodiment, the content of gluten is of between 0.1-5% w/w.

In another particular embodiment, the content of TPP is of between 0.1-10% w/w.

In another particular embodiment, the content of transglutaminase is of between 0.1-10% w/w.

In a preferred embodiment, the method of the invention is carried out using arabic gum as hydrocolloid, lentil protein as emulsifier, alginate as second hydrocolloid, preferably as co-emulsifier, microalgae oil and chitosan and gluten as polymeric shells and sodium tripolyphosphate and transglutaminase as stabilizers.

In another particular embodiment, the method of the invention comprises the use of pea protein as emulsifier with net positive charge, arabic gum as hydrocolloid with net negative charge, pectin as second hydrocolloid, preferably as co-emulsifier, essential oils and sunflower oil, pea protein as polymer and sodium tripolyphosphate (TPP) as stabilizer.

In a particular embodiment, the content of arabic gum-pea protein-pectin solution is of between 5-30% w/w.

In another particular embodiment, the content of pea protein is of between 0.1-5% w/w.

In another particular embodiment, the content of TPP is of between 0.1-10% w/w.

In a preferred embodiment, the method of the invention is carried out using arabic gum as hydrocolloid, pea protein as emulsifier, pectin as second hydrocolloid, preferably as co-emulsifier, essential oils, sunflower oil and pea protein as polymeric shell and sodium tripolyphosphate as stabilizer.

In another particular embodiment, the method of the invention comprises the use of pea protein as emulsifier with net positive charge, arabic gum as hydrocolloid with net negative charge, xanthan gum as second hydrocolloid, preferably as co-emulsifier, algae oil, zein as polymer, sodium tripolyphosphate (TPP) as stabilizer and bacon aroma.

In a particular embodiment, the content of arabic gum-pea protein-xanthan gum solution is of between 5-30% w/w.

In another particular embodiment, the content of zein is of between 0.5-10% w/w.

In another particular embodiment, the content of TPP is of between 0.1-10% w/w.

In a preferred embodiment, the method of the invention is carried out using arabic gum as hydrocolloid, pea protein as emulsifier, xanthan gum as second hydrocolloid, preferably as co-emulsifier, algae oil and zein as polymeric shell, sodium tripolyphosphate as stabilizer and bacon aroma.

In another particular embodiment, the method of the invention comprises the use of pea protein as emulsifier with net positive charge, arabic gum as hydrocolloid with net negative charge, xanthan gum as second hydrocolloid, preferably as co-emulsifier, sunflower oil, chitosan as polymer, sodium tripolyphosphate (TPP) as stabilizer and tocopherols and rosemary extract as antioxidants.

In a particular embodiment, the content of arabic gum-pea protein-xanthan gum solution is of between 5-30% w/w.

In another particular embodiment, the content of chitosan is of between 0.5-5% w/w.

In another particular embodiment, the content of TPP is of between 0.1-10% w/w.

In a preferred embodiment, the method of the invention is carried out using arabic gum as hydrocolloid, pea protein as emulsifier, xanthan gum as second hydrocolloid, preferably as co-emulsifier, sunflower oil and chitosan as polymeric shell, sodium tripolyphosphate as stabilizer and tocopherols and rosemary extract as antioxidants.

### Stabilized microparticles

In another aspect, the present invention relates to a stabilized microparticle, hereinafter the stabilized microparticle of the invention, comprising:
a) a core, wherein the core comprises:
   i) an oil-in-water (o/w) emulsion; comprising a lipid phase (o) and a water phase (w) and an emulsifier with net positive charge and
   ii) at least a first hydrocolloid with net negative charge dissolved or dispersed in the aqueous phase,
b) a shell comprising at least one stabilized polymer layer.

The term "microparticle" has been defined or explained in the method of the invention and this definition is applicable to the microparticle of the invention.

Core-shell microparticles are a class of particles that are composed of two or more different material layers. One of them forms the inner core and the others make the outer layers or the shell.

The terms "emulsion", "emulsifier", "hydrocolloid" and "oil" have been defined or explained in the method of the invention and these definitions are applicable to the microparticle of the invention.

In a particular embodiment, the emulsifier with net positive charge is selected from the group consisting of: monoglycerides and diglycerides, esters, sucroesters and sucroglycerides, propylenglycol fatty acid esters, polyglyceride fatty acid esters, organic acid mono- and diglycerides esters, polysorbates, fatty acid salts, lecithins, denatured or not, hydrolysed or not vegetable protein as pea protein, rice protein, lentil protein, chickpea protein, potato protein, oak protein, soy protein, wheat protein, rye protein, barley protein, oat protein, corn protein, lupine protein, sorghum protein, quinoa protein, canola protein, fava bean protein, mung bean protein, navy bean protein, peanut protein, sunflower protein, almond protein; denatured or not, hydrolysed or not protein from animal origin as collagen, gelatine, casein and whey proteins; and fermented protein as a soy-based fermented protein, a dairy-based fermented protein, a grain-based fermented protein and a legume-based fermented protein, or fractions of proteins including prolamins or prolamins and glutelins mixture such as gliadin, glutenin, gluten, orzanin, hordein, secalin, zein, kafirin and avenin and combinations thereof.

In a more particular embodiment, the emulsifier with net positive charge is pea protein, lentil protein, chickpea protein, potato protein or gelatine.

In some embodiments, the emulsifier with net positive charge content in the microparticle of the invention is of between 3 and 44% (w/w).

In a particular embodiment, the core of the microparticle comprises a second hydrocolloid with net negative charge, wherein the second hydrocolloid is preferably a co-emulsifier. Thus, in a particular embodiment, the core of the microparticle comprises two hydrocolloids with net negative charge.

In a particular embodiment, the total content of the hydrocolloids with net negative charge in the microparticle is of between 10 and 83% w/w.

In a particular embodiment, the first and the second hydrocolloids with net negative charge are selected from the group consisting of: agar, alginate, agar-agar, carragenate, cassia gum, xanthan gum, arabic gum, acacia gum, galactomannans such as guar gum and locust bean gum, glucomanans such as Konjac, xanthan gum with galactomannans, gellan gum, tara gum, gelatine, cellulose and modified cellulose such as carboxymethyl cellulose or methylcellulose, pectin, dextran, dextran derivatives, pullulan, xyloglucan, polyglutamate, starch and modified starch, hyaluronic acid, polyethylene glycol, polypropylene glycol, poly(tetramethylene ether) glycol, and/or combinations thereof.

In another particular embodiment, the lipid phase (o) is an oil or an emulsion comprising an oil and an emulsifier with net negative or neutral charge.

In another particular embodiment, the oil in the oil phase is a vegetable oil, an animal oil, an algal oil, a microalgal oil and/ or a microbial oil. In another particular embodiment, the oil optionally comprises a compound which is soluble in oil or dispersible in oil. In a more particular embodiment, the oil in the oil phase is an algal oil and/or a microalgal oil. In a preferred embodiment, the oil is an omega-3 rich algal oil or a microalgal oil.

The shell of the microparticle of the invention comprises at least one stabilized polymer layer. In a particular embodiment, the shell comprises between 1 and 4 stabilized polymer layers.

The term "polymer" has been defined or explained in the method of the invention and this definition is applicable to the microparticle of the invention.

In a particular embodiment, the polymer of the shell is selected from the group consisting of: chitosan, hyaluronic acid, chondroitin sulphate, chitin or a denatured or hydrolysed vegetable, animal or microbial protein selected from: albumin, casein, gelatine, collagen, apolipoprotein, pea protein, rice protein, lentil protein, chickpea protein, potato, oak, soy protein, wheat protein, rye protein, barley protein, oat protein, corn protein, lupine, sorghum, quinoa, canola, fava bean, mung bean, navy bean, peanut, sunflower and almond, or protein isolate fractions including prolamins or prolamins and glutelins mixture as gliadin, glutenin, gluten, orzanin, hordein, secalin, zein, kafirin and avenin and combinations thereof.

In a more particular embodiment, the polymer is chitosan, wheat protein, pea protein lentil protein, chickpea protein, gluten or zein.

In another particular embodiment, the stabilized polymer comprised in the shell of the microparticle is a physically-stabilized polymer.

In a more particular embodiment, the physically-stabilized polymer has been stabilized by physical means selected from heat, UV irradiation, vacuum and freeze-drying.

In another particular embodiment, the stabilized polymer comprised in the shell of the microparticle is a chemically-stabilized monomer.

In a more particular embodiment, the chemically-stabilized monomer has been stabilized by inducing intra and/or intermolecular interactions in the polymer by inducing ionic or covalent interactions between the polymer molecules.

In a particular embodiment, the ionic interactions are induced by a polyphosphate salt, a phosphate salt, a divalent acid or a salt thereof, vanillin or tannic acid.

In a preferred embodiment, the ionic interactions are induced by a polyphosphate salt, preferably sodium hexametaphosphate, sodium tripolyphosphate (TPP), vanillin or citric acid.

In another particular embodiment, the covalent interactions are created using a crosslinker selected from the group consisting of: a transglutaminase, an aldehyde, a carbodiimide and genipin.

In another particular embodiment, the lipid or the water phase contain one or more additives. In a particular embodiment, the additive is a food additive.

The term "food additives" has been defined or explained in the method of the invention, and this definition is applicable to the microparticle of the invention.

In a particular embodiment, the additive is selected from the group consisting of aroma or flavouring compounds, sweeteners, preservatives, antifreeze agents, cryoprotective agents, food dyes, salts, pH regulators and antioxidants and chelators.

The terms "aroma" or "flavouring compounds", "food dye", "sweeteners", "preservatives", "antifreeze agents", "cryoprotective agents", "salts", "pH regulators" and "antioxidants" have been defined or explained in the method of the invention, and these definitions are applicable to the microparticle of the invention.

In a preferred embodiment, the additive is an antioxidant. In a particular embodiment, the antioxidant is rosemary extract and/or tocopherols.

It will be understood that the antioxidant or antioxidants may be added once it has been prepared or can be included in one of the phases used in the preparation of the stabilized microparticle. The incorporation of the antioxidant in the aqueous phase or in the lipid phase will depend on the solubility of the antioxidant in each of the phases.

In a particular embodiment, the microparticle of the invention comprises a) a core which comprises chickpea protein as emulsifier with net positive charge, arabic gum as hydrocolloid with net negative charge and algae oil, and b) a shell comprising a stabilized polymer layer that comprises chitosan stabilized by sodium tripolyphosphate (TPP).

In another particular embodiment, the microparticle of the invention comprises a) a core which comprises lentil protein as emulsifier with net positive charge, arabic gum as hydrocolloid with net negative charge, alginate as second hydrocolloid, preferably as co-emulsifier, and microalgae oil and b) a shell comprising a stabilized polymer layer that comprises chitosan stabilized by sodium tripolyphosphate (TPP).

In another particular embodiment, the microparticle of the invention comprises a) a core which comprises pea protein as emulsifier with net positive charge, arabic gum as hydrocolloid with net negative charge, xanthan gum as second hydrocolloid, preferably as co-emulsifier, and microalgae oil, and b) a shell comprising a stabilized polymer layer that comprises chitosan stabilized by sodium tripolyphosphate (TPP). In a more particular embodiment, the microparticle of the invention comprises tocopherols and rosemary extract as antioxidants.

In another particular embodiment, the microparticle of the invention comprises a) a core which comprises pea protein as emulsifier with net positive charge, arabic gum as hydrocolloid with net negative charge, xanthan gum as second hydrocolloid, preferably as co-emulsifier, and algae oil, and b) a shell comprising a stabilized polymer layer that comprises gluten stabilized by sodium tripolyphosphate (TPP).

In another particular embodiment, the microparticle of the invention comprises a) a core which comprises potato protein as emulsifier with net positive charge, arabic gum as hydrocolloid with net negative charge, alginate as second hydrocolloid, preferably as co-emulsifier, and algae oil, and b) a shell comprising a stabilized polymer layer that comprises gluten stabilized by transglutaminase.

In another particular embodiment, the microparticle of the invention comprises a) a core which comprises lentil protein as emulsifier with net positive charge, arabic gum as hydrocolloid with net negative charge, alginate as second hydrocolloid, preferably as co-emulsifier, and algae oil, and b) a shell comprising more than one stabilized polymer layer that comprise chitosan stabilized by sodium tripolyphosphate (TPP).

In another particular embodiment, the microparticle of the invention comprises a) a core which comprises lentil protein as emulsifier with net positive charge, arabic gum as hydrocolloid with net negative charge, alginate as second hydrocolloid, preferably as co-emulsifier, and microalgae oil, and b) a shell comprising more than one stabilized polymer layer, wherein some of the layers comprise chitosan stabilized by sodium tripolyphosphate (TPP) and other additional layers comprise gluten stabilized by transglutaminase. In some embodiments, one stabilized polymer layer comprises chitosan stabilized by TPP and other stabilized polymer layer comprises gluten stabilized by transglutaminase.

In another particular embodiment, the microparticle of the invention comprises a) a core which comprises pea protein as emulsifier with net positive charge, arabic gum as hydrocolloid with net negative charge, pectin as second hydrocolloid, preferably as co-emulsifier, and essential oils and sunflower oil, and b) a shell comprising one stabilized polymer layer that comprises pea protein stabilized by sodium tripolyphosphate (TPP).

In another particular embodiment, the microparticle of the invention comprises a) a core which comprises pea protein as emulsifier with net positive charge, arabic gum as hydrocolloid with net negative charge, xanthan gum as second hydrocolloid, preferably as co-emulsifier, and algae oil, and b) a shell comprising one stabilized polymer layer that comprises zein stabilized by sodium tripolyphosphate (TPP). In some embodiments, the microparticle of the invention comprises bacon aroma.

In another particular embodiment, the microparticle of the invention comprises a) a core which comprises pea protein as emulsifier with net positive charge, arabic gum as hydrocolloid with net negative charge, xanthan gum as second hydrocolloid, preferably as co-emulsifier, and sunflower oil, and b) a shell comprising one stabilized polymer layer that comprises chitosan stabilized by sodium tripolyphosphate (TPP). In some embodiments, the microparticle of the invention comprises tocopherols and rosemary extract as antioxidants.

In some embodiments, the microparticle of the invention comprises between 3 and 44% of an emulsifier with net positive charge. In other embodiments, the microparticle of the invention comprises between 7 and 58% of one or more polymers. In other embodiments, the microparticle of the invention comprises between 10 and 83% of hydrocolloid(s). In other embodiments, the microparticle of the invention comprises between 0.10 and 8% of a stabilizer, particularly a cross-linker. In other embodiments, the microparticle of the invention comprises between 0.05 and 2.5% of antioxidant(s).

In a preferred embodiment, the microparticles according to the present invention contain arabic gum as hydrocolloid, chickpea protein as emulsifier, algae oil and chitosan as polymeric shell and sodium tripolyphosphate as stabilizer.

In another preferred embodiment, the microparticles according to the present invention contain arabic gum as hydrocolloid, lentil protein as emulsifier, alginate as second hydrocolloid, preferably as co-emulsifier, microalgae oil and chitosan as polymeric shell and sodium tripolyphosphate as stabilizer.

In another preferred embodiment, the microparticles according to the present invention contain arabic gum as hydrocolloid, pea protein as emulsifier, xanthan gum as second hydrocolloid, preferably as co-emulsifier, microalgae oil and chitosan as polymeric shell, sodium tripolyphosphate as stabilizer and tocopherols and rosemary extract as antioxidants.

In another preferred embodiment, the microparticles according to the present invention contain arabic gum as hydrocolloid, pea protein as emulsifier, xanthan gum as second hydrocolloid, preferably as co-emulsifier, algae oil and gluten as polymeric shell and sodium tripolyphosphate as stabilizer.

In another preferred embodiment, the microparticles according to the present invention contain arabic gum as hydrocolloid, potato protein as emulsifier, alginate as second hydrocolloid, preferably as co-emulsifier, algae oil and gluten as polymeric shell and transglutaminase as stabilizer.

In another preferred embodiment, the microparticles according to the present invention contain arabic gum as hydrocolloid, lentil protein as emulsifier, alginate as second hydrocolloid, preferably as co-emulsifier, algae oil and chitosan as polymeric shells and sodium tripolyphosphate as stabilizer. In a more preferred embodiment, the microparticles according to the present invention contain a shell comprising more than one stabilized polymer layer that comprise chitosan and sodium tripolyphosphate.

In another preferred embodiment, the microparticles according to the present invention contain arabic gum as hydrocolloid, lentil protein as emulsifier, alginate as second hydrocolloid, preferably as co-emulsifier, microalgae oil, chitosan and gluten as polymeric shells and sodium tripolyphosphate and transglutaminase as stabilizers. In a more preferred embodiment, one stabilized polymer layer comprises chitosan and TPP and other stabilized polymer layer comprises gluten and transglutaminase.

In another preferred embodiment, the microparticles according to the present invention contain arabic gum as hydrocolloid, pea protein as emulsifier, pectin as second hydrocolloid, preferably as co-emulsifier, essential oils and sunflower oil and pea protein as polymeric shell and sodium tripolyphosphate as stabilizer.

In another preferred embodiment, the microparticles according to the present invention contain arabic gum as hydrocolloid, pea protein as emulsifier, xanthan gum as second hydrocolloid, preferably as co-emulsifier, algae oil and zein as polymeric shell, sodium tripolyphosphate as stabilizer and bacon aroma.

In another preferred embodiment, the microparticles according to the present invention contain arabic gum as hydrocolloid, pea protein as emulsifier, xanthan gum as second hydrocolloid, preferably as co-emulsifier, sunflower oil and chitosan as polymeric shell, sodium tripolyphosphate as stabilizer and tocopherols and rosemary extract as antioxidants.

In another aspect, the present invention relates to a stabilized microparticle obtained by the method of the invention.

### Compositions and uses

In another aspect, the present invention relates to a composition, hereinafter the composition of the invention, comprising at least one stabilized microparticle obtained by the method of the invention or at least one stabilized microparticle of the invention.

The composition, broadly defined, is a set of components consisting of at least one stabilized microparticle of the invention. The composition may comprise other components such as, for example, inert substances or bioactive components. Thus, in a particular embodiment, the composition of the invention comprises at least one stabilized microparticle obtained by the method of the invention or at least one stabilized microparticle of the invention and a vehicle or carrier.

The 'vehicle' or 'carrier' is preferably an inert substance. The functions of the carrier are to facilitate the incorporation of other components or compounds, to allow for better dosage and administration and/or to give consistency and shape to the composition. When the presentation is liquid, the carrier is the diluent. The carrier may be natural or non-natural.

Optionally, in another particular embodiment, the composition of the invention may further comprise at least one bioactive component (active substance, active principle or therapeutic agent), such as for example other food components, plant or fungal products and/or pharmaceuticals.

The term 'bioactive component' refers to a compound with biological activity within the scope of the patent that may enhance or complement the activity of the stabilized microparticle of the invention, including food ingredients, supplements or components, nutraceuticals, probiotics, plants, extracts or components of plants, and pharmaceuticals.

The composition of the invention may be formulated for dietary administration, i.e. on its own or as part of the food consumed in the diet of the subject, part of fortified foods and supplements, for cosmetic administration, i.e. on its own or as part of cosmetic products, or for pharmaceutical administration, i.e. on its own or as part of pharmaceutical products administered to the subject by any means of administration.

The term "subject" refers to any animal of any species. Examples of subjects include, but are not limited to: animals of commercial interest such as poultry (chickens, ostriches, chicks, geese, partridges, etc.), rabbits, hares, pet animals (dogs, cats, etc.), sheep, goats, pigs, horses, and cattle (bulls, cows, oxen, etc.); animals of hunting interest, such as deer, reindeer, etc., animals of commercial aquaculture interest such as fish (trout and salmon and any member of the Salmonidae family, turbot, sole, sea bream and sea bass) and humans.

The composition of the invention may be formulated for dietary administration, i.e. on its own or as part of the food consumed in the diet of the subject.

Therefore, in another aspect, the present invention relates to a food composition or a feed composition, hereinafter the food composition or feed composition of the invention, comprising at least one stabilized microparticle obtained by the method of the invention or at least one stabilized microparticle of the invention, said food or feed composition comprising one or more edible ingredients.

In a particular embodiment, the food composition is selected from the group consisting of: foodstuff, beverage or food supplement.

The food composition may be a food or incorporated into a food or foodstuff intended for human and/or animal consumption.

The term "foodstuff" refers to any substance or product of any nature, solid or liquid, natural or processed which due to its characteristics, applications, components, preparation and state of preservation, can usually or ideally be used for some of the following purposes: a) as normal nutrition for human beings or animals or as pleasurable foods; or b) as dietetic products, in especial cases of human or animal food; thus, the definition broadly covers all the natural materials and finished products of any origin which, separately or conveniently mixed with one another, are suitable in the diet of human beings or animals. A ready-to-eat foodstuff is that which does not need to be diluted by means of an aqueous solution suitable for consumption for example. In principle, the ingredients present in a ready-to- eat foodstuff are balanced and there is no need to add additional ingredients to the foodstuff to make it ready to eat, such considered by a person skilled in the art. A concentrated foodstuff is that in which one or more ingredients are present at a higher concentration than in a ready-to-eat foodstuff, therefore for use it is necessary to dilute it by means of an aqueous solution suitable for consumption for example. Non-limiting, illustrative examples of foods provided by this invention include dairy products as milk, yogurts, margarines; drinks as juices and sport drinks; foods like biscuits, breads, cereals, pasta, sauces, etc.

In a particular embodiment, the foodstuff comprises between 0.001% and 99.998% by weight of the stabilized microparticle of the invention. In preferred embodiments, the food product may contain at least 0.1 percent by weight, at least 10 percent by weight, at least 15 percent by weight, at least 20 percent by weight, at least 25 percent by weight or at least 30 percent, at least 40 percent, at least 50 percent, at least 60 percent, at least 70 percent, at least 80 percent, or at least 90 percent by weight of stabilized microparticle relative to the total weight of the product or a value in a range having any of those two values as endpoints.

In a particular embodiment, the food composition is a foodstuff selected from the group consisting of a spread, a shortening, a dairy product, a vegetable oil-based dairy alternative, a bakery product, a processed meat product and an edible ink.

As used herein, the term "spread" means a food product that is literally spread, typically with a knife onto another food item such as e.g. bread or crackers. Preferred spreads of the present invention include chocolate spreads, nut-based spreads (peanut butter spread, almond butter spread, hazelnut spread), speculoos spreads, cheese or creamcheese spreads, and savoury spread.

In one embodiment, the foodstuff is a dairy product such as milk beverage, fermented milk beverage, butter, cream, processed cheese, cheese processed food, etc. or a dairy product substitutes margarine, shortening, fat spread, non-dairy creamer, coffee cream, whipped cream, etc. In another embodiment, the food product is a cold confectionery such as ice cream, jelly, pudding, etc.) and the like. In one embodiment, the food product of the invention may be, or comprise cheese. The cheese may be, for instance, a hard cheese or a soft cheese. For instance, it may be a cheddar, stilton, camembert, gouda, edam, Roquefort, mozzarella, parmesan or other cheese. In one preferred instance, the cheese is a cheddar cheese. The food product may be a cheese spread and/or processed cheese. In one instance, the cheese is a smoked cheese and in particular a smoked processed cheese. The food product may be a formed cheese product, such a cheese triangle or slice. The cheese may be a cheese spread. The cheese may be a hard or soft cheese. In further instances, the food product is, or comprises, a fungal cheese. In a preferred instance, the cheese is a blue or white fungal cheese. The cheese may be a veined cheese. Suitable cheeses include Roquefort; Camembert; Danish Blue cheese; Creamy Blue; Stilton; Cabrales, Blue Brie, Cambozola; Fourme d'Ambert; Gorgonzola; Bleu d'Auvergne and Cibosano and other mould containing cheeses. The cheese may be, for instance, a cheese made from, or comprising, cow, sheep, goat or buffalo milk. The cheese may be pasteurised or unpasteurised. The cheese may have been subjected to UHT treatment. Any of the compositions discussed herein may have been pasteurised or UHT treated or may be unpasteurised.

In another embodiment, the foodstuff according to the invention is a vegetable oil-based dairy alternative such as almond milk, chestnut milk, pecan milk, hazelnut milk, cashew milk, pine nut milk, and walnut milk as well as yogurts prepared using any of the above milks and other types of fermented milk products.

The stabilized microparticles according to the present invention can be used as an additive in meat products. Accordingly, in one embodiment, the foodstuff is a meat product, which includes, without limitation, sausages, burgers, hot dogs, jerkies, pet food and pet treats, etc., which may contain any known type of meat, such as poultry (chicken, turkey, Cornish game hen, etc.), beef, pork, lamb, rabbit, venison, buffalo, etc., or any combination thereof and vegetarian alternatives to traditional meat products (e.g., "veggie" burgers, sausages, nuggets, etc.).

In various aspects, the meat or processed meat product according to the invention further comprises beef, chicken, turkey, pork, lamb, rabbit, venison, game, buffalo, horse, plant proteins, fermented proteins, shell-fish (e.g., scallops, crab, lobster, etc.), fish, imitations of the foregoing, or combinations thereof. The meat or meat analog composition may further comprise plant proteins, such as, for example, peas, chickpeas, beans, lentils, legumes, mushrooms, soy, peanut, rapeseed meal, grains (e.g., quinoa), and the like and combinations thereof. The meat or processed meat product may further comprise fermented proteins, such as, for example, tofu or Quorn. In additional embodiment, the meat or processed meat product is in the form of a sausage, a burger, a kebab, a gyro, a shwarma, a patty, a cake, a loaf, a nugget, a strip, a hot dog, a deli product, a jerky, a pet food, a pet treat, a processed meat, an emulsified meat, or combinations thereof, or imitations thereof, and wherein the meat or processed meat product is made with beef, chicken, turkey, pork, lamb, horse, buffalo, venison, veal, game, fowl, plant proteins. The processed meat product, as used herein, also refers to imitations of meats or meat analogs such as such as vegetarian or vegan products comprising tofu, tempeh, seitan, beans, legumes, grain, or a combination thereof, in a form mimicking burgers, hot dogs, nuggets, etc.

In one embodiment, the foodstuff is a bakery product, such as a dough, a batter, and baked food items including, for example, fine bakery wares, breakfast cereals, cakes, cheesecakes, pies, cupcakes, cookies, bars, breads, rolls, biscuits, muffins, pastries, scones, croutons, crackers, sweet goods, snack cakes, pies, granola/snack bars, and toaster pastries; candy; hard confectionery; chocolate and other confectionery; chewing gum.

In another embodiment, the food product is a liquid food product or beverage. Beverages may include any drink which comprises fat compounds and may include dairy and non-dairy drinks. The formulation of suitable beverages is well-known in the art and includes, without limitation, milks, energy drinks, infant formula, carbonated drinks, teas, liquid meals, fruit juices, fruit-based drinks, vegetable-based drinks; multivitamin syrups, meal replacers, medicinal foods, and syrups; powdered beverage mixes. The foodstuff of the invention may also be something for addition to a beverage, such as a cream or cream substitute, for instance in a single serving container.

In another embodiment, the foodstuff is a coating.

As used herein, the term "coating" means a layer of an edible substance or mixture which is applied as a layer onto a food item. The layer can be applied as a liquid or as a solid. In some embodiments, the coating is applied to only portions of the food item. In other embodiments, the coating can completely encase the food item and thus encapsulate the food item. One example of a coating is icing or frosting which is a sweet, often creamy, glaze typically made of sugar with a liquid (water or milk) that is often enriched with ingredients such as butter, egg whites, cream cheese or flavourings.

In additional embodiments, the foodstuff is a mayonnaise, a salad dressing, a marinade, an aioli, a sandwich spread, a vegetable spread, a vegetable shortening, a vinaigrette, a condiment, a topping, a cheese, a yogurt, an ice cream, a butter, a margarine, a cream, a milk, a gravy, a fruit butter, a nut butter, a coffee beverage, a chocolate beverage, an imitation flavoured beverage, a syrup, a soup or a sauce.

In one embodiment, the foodstuff is an edible ink.

The term "edible ink" as used herein, refers to a substance that can be shaped in the form of a meat fiber matrix that mimics the texture and flavour of real meat by additive manufacturing, preferably using a 3D printer.

In some embodiments, the food composition of the invention is a nutritional or dietary supplement.

The term "supplement", synonymous with any of the terms "dietary supplement", "nutritional supplement", "food supplement", or "food supplement" or "food supplement" refers to products or preparations intended to supplement the normal diet of a subject and consisting of concentrated nutrient sources or other substances with a nutritional or physiological effect.

The food product according to the invention may contain one or more edible ingredients which may be part of the lipid or water phase or be found in both phases.

The term "edible ingredients", refers to an essentially pure compound or a multi component composition intended for or suitable for being added to food or feed. Exemplary edible ingredients suitable for being included in the food composition according to the invention include antifreeze agent and/or a cryoprotective agents, aroma or flavouring compounds, food dyes and sweeteners.

In another aspect, the present invention relates to a pharmaceutical composition, hereinafter the pharmaceutical composition of the invention, comprising at least one stabilized microparticle obtained by the method of the invention or at least one stabilized microparticle of the invention, and a pharmaceutically acceptable carrier.

The term "pharmaceutical composition" refers to a set of components consisting at least one stabilized microparticle obtained by the method of the invention or at least one stabilized microparticle of the invention of the invention, which has at least one application in improving the physical or physiological or psychological well-being of a subject and which involves an improvement in the general state of health of the subject or a reduction in the risk of disease.

The term "pharmaceutical composition" also covers medical devices, provided that the term 'medical device' refers to a product intended for use in human beings, separately or in combination, for any of the following specific medical purposes: prevention, treatment or alleviation of disease or treatment, alleviation or compensation of injury or disability and its principal mechanism of action is not pharmacological, metabolic or immunological.

As used herein "carrier" is meant any substance that serves to improve the delivery and the effectiveness of the active principle within the pharmaceutical composition. In a preferred embodiment, the carrier does not allow direct delivery of the compound to the cytoplasm of the cells, i.e. the carrier is not capable of fusing with the plasmatic membrane of the target cells. Examples of pharmaceutically acceptable carriers include one or more of water, saline, phosphate buffered saline, dextrose, glycerol, ethanol and the like, as well as combinations thereof. In many cases, it will be preferable to include isotonic agents, for example, sugars, polyalcohols such as mannitol, sorbitol, or sodium chloride in the composition. Pharmaceutically acceptable carriers may further comprise minor amounts of auxiliary substances such as wetting or emulsifying agents, preservatives or buffers, which enhance the shelf life or effectiveness of components forming part of the compositions of the invention. Examples of carriers without limitation are a series of saccharide such as lactose, dextrose, sucrose, sorbitol, mannitol, xylitol, erythritol, and maltitol; a series of starch such as corn starch, wheat starch, rice starch, and potato starch; a series of cellulose such as cellulose, methyl cellulose, sodium carboxy methyl cellulose, and hydroxyl propylmethyl cellulose; and a series of filler such as gelatine and polyvinyl pyrrolidone. In some cases, a disintegrant such as cross-linked polyvinyl pyrrolidone, agar, alginic acid, or sodium alginate may be added.

The pharmaceutical composition comprising the stabilized microparticle according to the present invention comprises the stabilized microparticle in a therapeutically effective amount.

The expression "therapeutically effective amount", as used herein, is understood as an amount capable of providing a therapeutic effect, and which can be determined by the person skilled in the art by commonly used means. The amount of the stabilized microparticle vary depending upon the subject and the particular mode of administration.

In another aspect, the present invention relates to the pharmaceutical composition of the invention for use as a medical product.

In another aspect, the present invention relates to the pharmaceutical composition of the invention for use in the treatment and/or prevention of cardiovascular diseases, metabolic diseases, skin related diseases, pain related disorders, immune disorders, diseases of the intestinal tract and brain related diseases.

As used in this context, to "treat" or "treatment" means to cure, ameliorate, stabilize, prevent, or reduce the severity of at least one symptom or a disease, pathological condition, or disorder. This term includes active treatment, that is, treatment directed specifically toward the improvement of a disease, pathological condition, or disorder, and also includes causal treatment, that is, treatment directed toward removal of the cause of the associated disease, pathological condition, or disorder. In addition, this term includes palliative treatment, that is, treatment designed for the relief of symptoms rather than the curing of the disease, pathological condition, or disorder; preventative treatment, that is, treatment directed to minimizing or partially or completely inhibiting the development of the associated disease, pathological condition, or disorder; and supportive treatment, that is, treatment employed to supplement another specific therapy directed toward the improvement of the associated disease, pathological condition, or disorder. It is understood that treatment, while intended to cure, ameliorate, stabilize, or prevent a disease, pathological condition, or disorder, need not actually result in the cure, amelioration, stabilization or prevention. The effects of treatment can be measured or assessed as described herein and as known in the art as is suitable for the disease, pathological condition, or disorder involved. Such measurements and assessments can be made in qualitative and/or quantitative terms. Thus, for example, characteristics or features of a disease, pathological condition, or disorder and/or symptoms of a disease, pathological condition, or disorder can be reduced to any effect or to any amount.

The term "prevention" is understood as the administration of the pharmaceutical composition according to the invention in an initial or early stage of the disease, or to also prevent its onset. In a particular embodiment, the term "prevention" refers to the administration of the pharmaceutical composition prior to the manifestation of the cardiovascular disease, metabolic disease, skin related disease, pain related disorder, immune disorder, disease of the intestinal tract or brain related disease, i.e. before symptoms manifest.

In another aspect, the present invention relates to a cosmetic composition, hereinafter the cosmetic composition of the invention, comprising at least one stabilized microparticle obtained by the method of the invention or at least one stabilized microparticle of the invention, and a cosmetically acceptable carrier.

The term "cosmetic composition" means any substance or mixture intended to be placed in contact with the superficial parts of the human body (epidermis, hair and capillary system, nails, lips and external genital organs) or with the teeth and oral mucous membranes, for the sole or principal purpose of cleaning, perfuming, modifying their appearance, protecting them, keeping them in good condition or correcting body odours. The cosmetic composition of the invention may comprise one or more components or compounds.

The term "cosmetically acceptable carrier" refers to a substance or combination of substances used to deliver active ingredients in a cosmetic product. This carrier ensures that the product is safe for use on the skin, hair, or nails, and helps to deliver the active ingredients effectively while maintaining the desired texture, appearance, and sensory experience of the product.

In a particular embodiment, the cosmetic composition of the invention is provided in the form of a cream, an emulsion, a lotion, a gel, a foam, a paste, a balm, a milk, a serum or a solution.

In another particular embodiment, the cosmetically acceptable carrier is selected from the group consisting of antioxidants, moisturizers, skin conditioning agents, antistatic agents, smoothing agents, astringent agents, emollient agents, tonics, bleaching agents, cleansing agents, regenerating agents, firming agents, energizing agents, lifting agents, volumizing agents and protective agents.

In another aspect, the present invention relates to the use of the cosmetic composition of the invention for non-therapeutic cosmetic treatment and/or care of skin and/or hair.

In another aspect, the present invention relates to a nutraceutical composition, hereinafter the nutraceutical composition of the invention, comprising at least one stabilized microparticle obtained by the method of the invention or at least one stabilized microparticle of the invention, and a nutraceutical acceptable carrier.

The term "nutraceutical composition" refers to a food which, independently of providing nutrients to the person who takes it, beneficially affects one or more functions of the organism, in such a way as to provide a better state of health and well-being.

Such a nutraceutical composition may be a food or incorporated into a food or foodstuff intended for human and/or animal consumption.

In some particular embodiments, the nutraceutical composition of the invention is a food for specific nutritional purposes. In some specific embodiments, the nutraceutical composition of the invention is a food for special medical purposes.

Foods for special medical purposes are those foods that have been specially prepared or formulated for the dietary management of patients under medical supervision. These foods are intended to meet all or part of the dietary needs of patients.

In some embodiments, the nutraceutical composition of the invention is a nutritional or dietary supplement.

The term 'supplement', synonymous with any of the terms 'dietary supplement', 'nutritional supplement', 'food supplement', or 'food supplement' or 'food complement' refers to products or preparations intended to supplement the normal diet of a subject and consisting of concentrated nutrient sources or other substances with a nutritional or physiological effect.

The nutritional supplement may be in single or combined form and marketed in dosage form, i.e. in capsules, pills, tablets and other similar forms, powder sachets, liquid ampoules and drop dispensing bottles and other similar forms of liquids and powders designed to be taken in a single quantity. There is a wide range of nutrients and other elements that may be present in food supplements, including vitamins, minerals, amino acids, essential fatty acids, fibre, enzymes, plants, plant extracts, mushrooms and fungal extracts. Since their function is to supplement the nutrient supply of the diet, they should not be used as a substitute for a balanced diet and their intake should not exceed the daily dose expressly recommended by a doctor or nutritionist. The nutraceutical composition of the invention may also form part of the so-called 'foods for special medical groups', i.e. foods that meet specific nutritional needs.

Examples of foods that may comprise the nutraceutical composition of the invention include, but are not limited to, animal feed, dairy products, vegetable products, meat products, snacks, chocolates, beverages, baby food, cereals, fried foods, industrial bakery products and biscuits. Examples of dairy products include, but are not limited to, fermented milk products (e.g., but not limited to, yoghurt or cheese) or non-fermented milk (e.g., but not limited to, ice cream, butter, margarine or whey). The plant product is, for example, but not limited to, a cereal in any form of presentation, fermented (e.g., soy yoghurt, oat yoghurt, etc.) or unfermented. Beverages include, but are not limited to, any fruit juice or non-fermented milk.

The term "nutraceutical acceptable carrier" refers to a substance or material that is used to deliver or support the active ingredients in a nutraceutical product, ensuring that the active components can be consumed, absorbed, and used by the body effectively. These carriers are considered safe for consumption and are used to enhance the formulation of nutraceuticals in a way that preserves the integrity, stability, and bioavailability of the active ingredients. Examples of nutraceutical acceptable carriers are water or oil bases, gelatine or plant-based capsules, emulsifiers, fillers and excipients, lipid-base carriers (liposomes or micelles), binders and coatings (starch or gum-based compounds), sweeteners and flavour enhancers and antioxidants or preservatives (ascorbic acid or tocopherols).

In another aspect, the present invention relates to the use of a stabilized microparticle obtained by the method of the invention or of the stabilized microparticle of the invention as delivery agent of the oil forming part of the emulsion.

The term "delivery agent" refers to a substance used to transport active ingredients in a product to a targeted area, ensuring that these ingredients are effectively absorbed and utilized.

In another aspect, the present invention relates to the use of a stabilized microparticle obtained by the method of the invention or of the stabilized microparticle of the invention as an additive in feed.

In another aspect, the present invention relates to the use of a stabilized microparticle obtained by the method of the invention or of the stabilized microparticle of the invention as an antioxidant.

The term "antioxidant" has been defined or explained above.

In another aspect, the present invention relates to the use of a stabilized microparticle obtained by the method of the invention or of the stabilized microparticle of the invention to protect compounds from oxidation.

The invention is described herein by way of the following examples which are merely illustrative and not limitative of the scope of the invention.

In further aspects, the present invention relates to:
1. A method for obtaining a stabilized microparticle comprising the steps of:
   (i) providing an oil-in-water (o/w) emulsion comprising a lipid phase (o), a water phase (w) and an emulsifier with net positive charge, wherein the aqueous phase contains at least one hydrocolloid with net negative charge,
   (ii) contacting the o/w emulsion with a polymer wherein said contacting is carried out under pH conditions that results in that the net charge of the polymer is positive and under conditions that allow the binding of the polymer and hydrocolloid into microparticles containing a core region formed by the emulsion and a polymer shell, and
   (iii) stabilizing the polymer thereby leading to stabilized microparticles.
2. The method according to aspect 1, wherein the providing of the oil-in-water (o/w) emulsion comprising a lipid phase (o), a water phase (w) and an emulsifier with net positive charge in step (i) involves a method comprising the steps of:
   (a) contacting an oil with an emulsifier and at least one hydrocolloid, said emulsifier and said at least one hydrocolloid being provided in aqueous solution and
   (b) processing the mixture obtained in step (a) under conditions adequate for the dispersion of the oil in the aqueous solution to obtain the oil-in-water emulsion (o/w).
3. The method according to aspect 1, wherein the lipid phase (o) is an oil or an emulsion comprising an oil and an emulsifier with net negative or neutral charge.
4. The method according to aspect 3, wherein the emulsifier with net negative or neutral charge is selected from the group consisting of: lecithin, mono or diglycerides, esters and polysorbates.
5. The method according to any one of aspects 1 to 4, wherein the method further comprises (iv) forming one or more additional stabilized polymer layers around the shell of the microparticle, wherein each additional stabilized polymer layer is added by a method that comprises:
   a) contacting the microparticle with an additional polymer, wherein said contacting is carried out under conditions that result in the net charge of the additional polymer being opposite to the net charge of the microparticle and under conditions that allow the binding of the additional polymer and the microparticle, and
   b) stabilizing the additional polymer thereby leading to the formation of an additional stabilized layer.
6. The method according to aspect 5, wherein the method further comprises forming between 1 and 4 stabilized polymer layers in the shell of the microparticle.
7. The method according to aspects 5 or 6, wherein the additional polymer used in each of the additional stabilized polymer layers is the same as the polymer used in step (ii).
8. The method according to aspects 5 or 6, wherein the additional polymer used in each of the additional stabilized polymer layers is different from the polymer used in step (ii).
9. The method according to any one of aspects 5 to 8, wherein the stabilization of the additional polymer applied in each of the additional stabilized polymer layers is carried out by the same physical or chemical means used in step (iii).
10. The method according to any one of aspects 5 to 8, wherein the stabilization of the additional polymer applied in each of the additional stabilized polymer layers is carried out by physical or chemical means other than those used in step (iii).
11. The method according to any one of aspects 1 to 10, wherein the emulsifier with net positive charge in the oil-in-water (o/w) emulsion is selected from the group consisting of: monoglycerides and diglycerides, esters, sucroesters and sucroglycerides, propylenglycol fatty acid esters, polyglyceride fatty acid esters, organic acid mono- and diglycerides esters, polysorbates, fatty acid salts, lecithins, denatured or not, hydrolysed or not vegetable protein as pea protein, rice protein, lentil protein, chickpea protein, potato protein, oak protein, soy protein, wheat protein, rye protein, barley protein, oat protein, corn protein, lupine protein, sorghum protein, quinoa protein, canola protein, fava bean protein, mung bean protein, navy bean protein, peanut protein, sunflower protein, almond protein; denatured or not, hydrolysed or not protein from animal origin as collagen, gelatine, casein and whey proteins; and fermented protein as a soy-based fermented protein, a dairy-based fermented protein, a grain-based fermented protein and a legume-based fermented protein, protein isolate fractions including prolamins or prolamins and glutelins mixture as gliadin, glutenin, gluten, orzanin, hordein, secalin, zein, kafirin and avenin and combinations thereof.
12. The method according to aspect 11, wherein the emulsifier with net positive charge is pea protein, lentil protein, chickpea protein, potato protein or gelatine.
13. The method according to any one of aspects 1 to 12, wherein the emulsifier with net positive charge content in the mixture is of between 0.1 and 10 % by weight.
14. The method according to any one of aspects 1 to 13, wherein a second hydrocolloid with net negative charge is used in step (i), and wherein the second hydrocolloid is preferably a co-emulsifier.
15. The method according to any one of aspects 1 to 14, wherein the total content of the hydrocolloids with net negative charge is of between 1 and 30% w/w.
16. The method according to any one of aspects 1 to 15, wherein the weight ratio of the combined content of oil phase and emulsifier and aqueous phase containing the at least one hydrocolloid is of 0.01:1 to 2:1.
17. The method according to any one of aspects 1 to 15, wherein the weight ratio of emulsion to polymer is of 10:1 to 1:5.
18. The method according to any one of aspects 1 to 17, wherein the oil, the emulsifier with net positive charge, the first and the second hydrocolloids with net negative charge are from a non-animal source, preferably a plant source, an algal source, a microalgal source or a microbial source, or from an animal source.
19. The method according to any one of aspects 1 to 18, wherein the oil comprises a vegetable oil, an animal oil, an algal oil, a microalgal oil and/or a microbial oil, or wherein the oil optionally comprises a compound which is soluble in oil or dispersible in oil.
20. The method according to aspect 19, wherein the oil comprises a fish oil, algal oil, and/or microalgal oil.
21. The method according to any one of aspects 1 to 20, wherein the at least one hydrocolloid with net negative charge is selected from the group consisting of:
   agar, alginate, agar-agar, carragenate, cassia gum, xanthan gum, arabic gum, acacia gum, guar gum, locust bean gum, Konjac, xanthan gum with galactomannans, gellan gum, tara gum, gelatine, cellulose and modified cellulose, pectin, dextran, dextran derivatives, pullulan, xyloglucan, polyglutamate, starch and modified starch, hyaluronic acid, polyethylene glycol, polypropylene glycol, poly(tetramethylene ether) glycol, and/or combinations thereof.
22. The method according to any one of aspects 1 to 21, wherein the polymer with net positive charge used in step (ii) or the additional polymer is selected from the group consisting of chitosan, hyaluronic acid, chondroitin sulphate, chitin or a denatured or hydrolysed vegetable, animal or microbial protein selected from: albumin, casein, gelatine, collagen, apolipoprotein, pea protein, rice protein, lentil protein, chickpea protein, potato, oak, soy protein, wheat protein, rye protein, barley protein, oat protein, corn protein, lupine, sorghum, quinoa, canola, fava bean, mung bean, navy bean, peanut, sunflower and almond, or protein isolate fractions including prolamins or prolamins and glutelins mixture as gliadin, glutenin, gluten, orzanin, hordein, secalin, zein, kafirin and avenin and combinations thereof.
23. The method according to aspect 22, wherein the polymer with net positive charge used in step (ii) or the additional polymer is chitosan, wheat protein, pea protein, lentil protein, chickpea protein, gluten or zein.
24. The method according to any one of aspects 1 to 23, wherein the polymer with net positive charge is at a ratio of between 0.05 and 10% (w/w).
25. The method according to any one of aspects 1 to 24, wherein the pH conditions in step (ii) are acidic conditions and wherein the acidic conditions result from the addition of an acid to the emulsion.
26. The method according to aspect 25, wherein the acid content is of between 0.1 and 5% by weight.
27. The method according to any of aspects 25 or 26, wherein the acid is selected from the group consisting of: lactic acid, citric acid, acetic acid, malic acid, ascorbic acid, tartaric acid, benzoic acid and sorbic acid.
28. The method according to aspect 27, wherein the acid is lactic acid, citric acid or malic acid.
29. The method according to any one of aspects 1 to 29, wherein the pH of step (ii) is of between 2 and 6.
30. The method according to any one of aspects 1 to 29, wherein the stabilization in step (iii) or the stabilization of the additional polymer is carried out by physical or chemical means.
31. The method according to aspect 30, wherein the stabilization in step (iii) or the stabilization of the additional polymer is by physical means selected from heat, UV irradiation, vacuum and freeze-drying.
32. The method according to aspect 31, wherein the stabilization in step (iii) or the stabilization of the additional polymer is achieved chemically by inducing ionic or covalent interactions between the polymer molecules.
33. The method according to aspect 32, wherein the ionic interactions are induced by a polyphosphate salt, a phosphate salt, a divalent acid or a salt thereof, vanillin or tannic acid.
34. The method according to aspect 33, wherein the ionic interactions are induced by a polyphosphate salt, preferably sodium hexametaphosphate, sodium tripolyphosphate (TPP), vanillin or citric acid.
35. The method according to aspect 32, wherein the covalent interactions are created using a cross-linker selected from the group consisting of: a transglutaminase, an aldehyde, a carbodiimide and genipin.
36. The method according to any one of aspects 1 to 35, wherein the lipid or water phase contain one or more additives.
37. The method according to aspect 36, wherein the additive is selected from the group consisting of preservatives, antifreeze agents, cryoprotective agents, aroma or flavouring compounds, food dyes, salts, sweeteners, pH regulators, chelators and antioxidants.
38. The method according to aspect 37, wherein the additive is an antioxidant.
39. The method according to any one of aspects 1 to 38, wherein the method is carried out using:
   i) arabic gum as hydrocolloid, chickpea protein as emulsifier, algae oil, chitosan as polymer and sodium tripolyphosphate (TPP) as stabilizer;
   ii) arabic gum as hydrocolloid, lentil protein as emulsifier, alginate as second hydrocolloid, preferably as co-emulsifier, microalgae oil, chitosan as polymer and sodium tripolyphosphate (TPP) as stabilizer;
   iii) arabic gum as hydrocolloid, pea protein as emulsifier, xanthan gum as second hydrocolloid, preferably as co-emulsifier, microalgae oil, chitosan as polymer, sodium tripolyphosphate (TPP) as stabilizer and tocopherols and rosemary extract as antioxidants;
   iv) arabic gym as hydrocolloid, pea protein as emulsifier, xanthan gum as second hydrocolloid, preferably as co-emulsifier, algae oil, gluten as polymer and sodium tripolyphosphate (TPP) as stabilizer;
   v) arabic gum as hydrocolloid, potato protein as emulsifier, alginate as second hydrocolloid, preferably as co-emulsifier, algae oil, gluten as polymer and transglutaminase as stabilizer;
   vi) arabic gum as hydrocolloid, lentil protein as emulsifier, alginate as second hydrocolloid, preferably as co-emulsifier, algae oil, chitosan as polymer and as additional polymer and sodium tripolyphosphate (TPP) as stabilizer;
   vii) arabic gum as hydrocolloid, lentil protein as emulsifier, alginate as second hydrocolloid, preferably as co-emulsifier, microalgae oil, chitosan as polymer and gluten as additional polymer and sodium tripolyphosphate (TPP) and transglutaminase as stabilizers;
   viii) arabic gum as hydrocolloid, pea protein as emulsifier, pectin as second hydrocolloid, preferably as co-emulsifier, essential oils and sunflower oil, pea protein as polymer and sodium tripolyphosphate (TPP) as stabilizer;
   ix) arabic gum as hydrocolloid, pea protein as emulsifier, xanthan gum as second hydrocolloid, preferably as co-emulsifier, algae oil, zein as polymer, sodium tripolyphosphate (TPP) as stabilizer and an aroma; or
   x) arabic gum as hydrocolloid, pea protein as emulsifier, xanthan gum as second hydrocolloid, preferably as co-emulsifier, sunflower oil, chitosan as polymer, sodium tripolyphosphate (TPP) as stabilizer and tocopherols and rosemary extract as antioxidants.
40. A stabilized microparticle comprising:
   a) a core, wherein the core comprises:
      i) an oil-in-water (o/w) emulsion; comprising a lipid phase (o) and a water phase (w) and an emulsifier with net positive charge and
      ii) at least a first hydrocolloid with net negative charge dissolved or dispersed in the aqueous phase,
   b) a shell comprising at least one stabilized polymer layer.
41. The stabilized microparticle according to aspect 40, wherein the emulsifier with net positive charge is selected from the group consisting of: monoglycerides and diglycerides, esters, sucroesters and sucroglycerides, propylenglycol fatty acid esters, polyglyceride fatty acid esters, organic acid mono- and diglycerides esters, polysorbates, fatty acid salts, lecithins, denatured or not, hydrolysed or not vegetable protein as pea protein, rice protein, lentil protein, chickpea protein, potato protein, oak protein, soy protein, wheat protein, rye protein, barley protein, oat protein, corn protein, lupine protein, sorghum protein, quinoa protein, canola protein, fava bean protein, mung bean protein, navy bean protein, peanut protein, sunflower protein, almond protein; denatured or not, hydrolysed or not protein from animal origin as collagen, gelatine, casein and whey proteins; and fermented protein as a soy-based fermented protein, a dairy-based fermented protein, a grain-based fermented protein and a legume-based fermented protein or protein isolate fractions including prolamins or prolamins and glutelins mixture as gliadin, glutenin, gluten, orzanin, hordein, secalin, zein, kafirin and avenin and combinations thereof.
42. The stabilized microparticle according to aspect 41, wherein the emulsifier with net positive charge is pea protein, lentil protein, chickpea protein, potato protein or gelatine.
43. The stabilized microparticle according to any one of aspects 40 to 42, wherein the emulsifier with net positive charge content is of between 3 and 44 % w/w.
44. The stabilized microparticle according to any one of aspects 40 to 43, wherein the core of the microparticle comprises a second hydrocolloid with net negative charge, and wherein the second hydrocolloid is preferably a co-emulsifier.
45. The stabilized microparticle according to any one of aspects 40 to 44, wherein the total content of hydrocolloids with net negative charge is of between 10 and 83% w/w.
46. The stabilized microparticle according to any one of aspects 40 to 45, wherein the first and the second hydrocolloids with net negative charge are selected from the group consisting of: agar, alginate, agar-agar, carragenate, cassia gum, xanthan gum, arabic gum, acacia gum, guar gum, locust bean gum, Konjac, xanthan gum with galactomannans, gellan gum, tara gum, gelatine, cellulose and modified cellulose, pectin, dextran, dextran derivatives, pullulan, xyloglucan, polyglutamate, starch and modified starch, hyaluronic acid, polyethylene glycol, polypropylene glycol, poly(tetramethylene ether) glycol, and/or combinations thereof.
47. The stabilized microparticle according to any one of aspects 40 to 46, wherein the lipid phase (o) is an oil or an emulsion comprising an oil and an emulsifier with net negative or neutral charge.
48. The stabilized microparticle according to any one of aspects 40 to 47, wherein the oil in the lipid phase is a vegetable oil, an animal oil, an algal oil, a microalgal oil and/or a microbial oil, or wherein the oil optionally comprises a compound which is soluble in oil or dispersible in oil.
49. The stabilized microparticle according to aspect 48, wherein the oil in the lipid phase is a fish oil, an algal oil and/or a microalgal oil.
50. The stabilized microparticle according to any one of aspects 40 to 49, wherein the shell comprises between 1 and 4 stabilized polymer layers.
51. The stabilized microparticle according to any one of aspects 40 to 50, wherein the polymer of the shell is selected from the group consisting of: chitosan, hyaluronic acid, chondroitin sulphate, chitin or a denatured or hydrolysed vegetable, animal or microbial protein selected from: albumin, casein, gelatine, collagen, apolipoprotein, pea protein, rice protein, lentil protein, chickpea protein, potato, oak, soy protein, wheat protein, rye protein, barley protein, oat protein, corn protein, lupine, sorghum, quinoa, canola, fava bean, mung bean, navy bean, peanut, sunflower and almond, or protein isolate fractions including prolamins or prolamins and glutelins mixture as gliadin, glutenin, gluten, orzanin, hordein, secalin, zein, kafirin and avenin and combinations thereof.
52. The stabilized microparticle according to aspect 51, wherein the polymer is chitosan, wheat protein, pea protein, lentil protein, chickpea protein, gluten or zein.
53. The stabilized microparticle according to any one of aspects 40 to 52, wherein the at least one stabilized polymer layer is a physically-stabilized polymer or a chemically-stabilized monomer.
54. The stabilized microparticle according to aspect 53, wherein the physically-stabilized polymer has been stabilized by physical means selected from heat, UV irradiation, vacuum and freeze-drying.
55. The stabilized microparticle according to aspect 53, wherein the chemically-stabilized monomer has been stabilized by inducing intra and/or intermolecular interactions in the polymer by inducing ionic or covalent interactions between the polymer molecules.
56. The stabilized microparticle according to aspect 55, wherein the ionic interactions are induced by a polyphosphate salt, a phosphate salt, a divalent acid or a salt thereof, vanillin or tannic acid.
57. The stabilized microparticle according to aspect 56, wherein the ionic interactions are induced by a polyphosphate salt, preferably sodium hexametaphosphate, sodium tripolyphosphate (TPP), vanillin or citric acid.
58. The stabilized microparticle according to aspect 55, wherein the covalent interactions are created using a cross-linker selected from the group consisting of: a transglutaminase, an aldehyde, a carbodiimide and genipin.
59. The stabilized microparticle according to any one of aspects 40 to 58, wherein the lipid or the water phase contain one or more additives.
60. The stabilized microparticle according to aspect 59, wherein the additive is selected from the group consisting of aroma or flavouring compounds, sweeteners, preservatives, antifreeze agents, cryoprotective agents, food dyes, salts, pH regulators and antioxidants and chelators.
61. The stabilized microparticle according to aspect 60, wherein the additive is an antioxidant.
62. The stabilized microparticle according to any one of aspects 40 to 61, wherein the microparticle contains:
   i) arabic gum as hydrocolloid, chickpea protein as emulsifier, algae oil, chitosan as polymer and sodium tripolyphosphate (TPP) as stabilizer;
   ii) arabic gum as hydrocolloid, lentil protein as emulsifier, alginate as second hydrocolloid, preferably as co-emulsifier, microalgae oil, chitosan as polymer and sodium tripolyphosphate (TPP) as stabilizer;
   iii) arabic gum as hydrocolloid, pea protein as emulsifier, xanthan gum as second hydrocolloid, preferably as co-emulsifier, microalgae oil, chitosan as polymer, sodium tripolyphosphate (TPP) as stabilizer and tocopherols and rosemary extract as antioxidants,
   iv) arabic gym as hydrocolloid, pea protein as emulsifier, xanthan gum as second hydrocolloid, preferably as co-emulsifier, algae oil, gluten as polymer and sodium tripolyphosphate (TPP) as stabilizer;
   v) arabic gum as hydrocolloid, potato protein as emulsifier, alginate as second hydrocolloid, preferably as co-emulsifier, algae oil, gluten as polymer and transglutaminase as stabilizer;
   vi) arabic gum as hydrocolloid, lentil protein as emulsifier, alginate as second hydrocolloid, preferably as co-emulsifier, algae oil, chitosan as polymer and sodium tripolyphosphate (TPP) as stabilizer;
   vii) arabic gum as hydrocolloid, lentil protein as emulsifier, alginate as second hydrocolloid, preferably as co-emulsifier, microalgae oil, chitosan and gluten as polymers and sodium tripolyphosphate (TPP) and transglutaminase as stabilizers;
   viii) arabic gum as hydrocolloid, pea protein as emulsifier, pectin as second hydrocolloid, preferably as co-emulsifier, essential oils and sunflower oil, pea protein as polymer and sodium tripolyphosphate (TPP) as stabilizer;
   ix) arabic gum as hydrocolloid, pea protein as emulsifier, xanthan gum as second hydrocolloid, preferably as co-emulsifier, algae oil, zein as polymer, sodium tripolyphosphate (TPP) as stabilizer and an aroma; or
   x) arabic gum as hydrocolloid, pea protein as emulsifier, xanthan gum as second hydrocolloid, preferably as co-emulsifier, sunflower oil, chitosan as polymer, sodium tripolyphosphate (TPP) as stabilizer and tocopherols and rosemary extract as antioxidants.
63. A stabilized microparticle obtained by the method according to any one of aspects 1 to 39.
64. A composition comprising at least one stabilized microparticle obtained by the method according to any one of aspects 1 to 39 or at least one stabilized microparticle according to any one of aspects 40 to 62.
65. A food or feed composition comprising at least one stabilized microparticle obtained by the method according to any one of aspects 1 to 39 or at least one stabilized microparticle according to any one of aspects 40 to 62, said food or feed composition comprising one or more edible ingredients.
66. The food composition according to aspect 65, wherein the food composition is selected from the group consisting of: foodstuff, beverage or food supplement.
67. The food composition according to aspects 65 or 66, wherein the food composition is a foodstuff selected from the group consisting of a spread, a shortening, a dairy product, a vegetable oil-based dairy alternative, a bakery product, a processed meat product and an edible ink.
68. A pharmaceutical composition comprising at least one stabilized microparticle obtained by the method according to any one of aspects 1 to 39 or at least one stabilized microparticle according to any one of aspects 40 to 62, and a pharmaceutical acceptable carrier.
69. The pharmaceutical composition according to aspect 68 for use as a medical product.
70. The pharmaceutical composition according to aspect 68 for use in the treatment and/or prevention of cardiovascular diseases, metabolic diseases, skin related diseases, pain related disorders, immune disorders, diseases of the intestinal tract and brain related diseases.
71. A cosmetic composition comprising at least one stabilized microparticle obtained by the method according to any one of aspects 1 to 39 or at least one stabilized microparticle according to any one of aspects 40 to 62, and a cosmetically acceptable carrier.
72. The cosmetic composition according to aspect 71, which is provided in the form of a cream, an emulsion, a lotion, a gel, a foam, a paste, a balm, a milk, a serum or a solution.
73. The cosmetic composition according to any of aspects 71 or 72, wherein the cosmetically acceptable carrier is selected from the group consisting of antioxidants, moisturizers, skin conditioning agents, antistatic agents, smoothing agents, astringent agents, emollient agents, tonics, bleaching agents, cleansing agents, regenerating agents, firming agents, energizing agents, lifting agents, volumizing agents and protective agents.
74. Use of the cosmetic composition according to any one of aspects 71 to 73 for non-therapeutic cosmetic treatment and/or care of skin and/or hair.
75. A nutraceutical composition comprising at least one stabilized microparticle obtained by the method according to any one of aspects 1 to 39 or at least one stabilized microparticle according to any one of aspects 40 to 62, and a nutraceutical acceptable carrier.
76. Use of a stabilized microparticle obtained by the method according to any one of aspects 1 to 39 or of the stabilized microparticle according to any one of aspects 40 to 62 as delivery agent of the oil forming part of the emulsion.
77. Use of a stabilized microparticle obtained by the method according to any one of aspects 1 to 39 or of the stabilized microparticle according to any one of aspects 40 to 62 as an additive in feed.
78. Use of a stabilized microparticle obtained by the method according to any one of aspects 1 to 39 or of the stabilized microparticle according to any one of aspects 40 to 62 as an antioxidant.
79. Use of a stabilized microparticle obtained by the method according to any one of aspects 1 to 39 or of the stabilized microparticle according to any one of aspects 40 to 62 to protect compounds from oxidation.

### EXAMPLES

Example 1. A stabilized microparticle using arabic gum as hydrocolloid, chickpea protein as emulsifier, algae oil and chitosan as polymeric shell and sodium tripolyphosphate as stabilizer.
- Preparation of a chitosan solution (0.5-5%, w/w): a pH regulator was added to obtain a 2% w/w acid solution in water in a glass beaker. The needed amount of chitosan was weighted and added to the 2% acid solution in the glass beaker. The chitosan was dissolved for 45 minutes stirring at speed 3 and pH was adjusted to 3-4 using acid (and NaOH 0.1M if it would be necessary).
- Preparation of a Tripolyphosphate solution (TPP) (0.1-10 %, w/w). The needed amount of sodium tripolyphosphate was weighted and added to water in the glass beaker. The TPP was dissolved for 30 minutes stirring and pH was adjusted to 3-4 using pH regulator (and NaOH 0.1M if it would be necessary).
- Preparation of an arabic gum - chickpea solution (5-30%, w/w): distilled water was added to the needed amount of arabic gum and chickpea protein in a glass beaker. The solution was stirred for 1 hour at speed 3. Then, the pH of the solution was adjusted to 3-4.
- The rod of the Ultraturrax was inserted in the arabic gum solution-chickpea solution, and the system speed was increased to 11.000 rpm. Then, the oil was poured, previously weighted, slowly and left 10 minutes. The temperature of the system can be increased. An ice bath can be used to keep the emulsion at room temperature. The chitosan solution was added on the emulsion drop to drop using a peristaltic pump and taking control of the temperature (~25°C). The dispersion was stirred for 15 minutes.
- Then, the tripolyphosphate sodium solution was added drop by drop using a peristaltic pump to control de dripping speed.
- The microparticles were stirred for 15 minutes and decant overnight at 2-8°C.
- The supernatant was extracted by peristaltic pump and washing solution composed by 0.05M NaCl solution. The suspension was washed for 10 minutes using magnetic stirrer.
- Then, the suspension was centrifuged. The pellet was introduced into sachets, vacuum sealer and stored at 2-8°C.

Example 2. A stabilized microparticle using arabic gum as hydrocolloid, lentil protein as emulsifier, alginate as second hydrocolloid, preferably as co-emulsifier, microalgae oil, chitosan as polymeric shell and sodium tripolyphosphate as stabilizer.
- Preparation of a chitosan solution (0.5-5%, w/w): pH regulator was added to obtain a 2% w/w acid solution in water in a glass beaker. The needed amount of chitosan was weighted and added to the 2% acid solution in the glass beaker. The chitosan was dissolved for 45 minutes stirring at speed 3 and pH was adjusted to 3-4 using acid (and NaOH 0.1M if it would be necessary).
- Preparation of a Tripolyphosphate solution (TPP) (0.1-10 %, w/w). The needed amount of sodium tripolyphosphate was weighted and added to water in the glass beaker. The TPP was dissolved for 30 minutes stirring and pH was adjusted to 3-4 using pH regulator (and NaOH 0.1M if it would be necessary).
- Preparation of an arabic gum - lentil protein - alginate solution (5-30%, w/w): distilled water was added to the needed amount of arabic gum and chickpea protein in a glass beaker. It was stirred for 1 hour at speed 3. Then, pH of the solution was adjusted to 3-4.
- The rod of the Ultraturrax was inserted in the arabic gum solution - lentil protein
- alginate solution, the system speed is increased to 11.000 rpm. Then, the microalgae oil was poured, previously weighted, slowly and leave 10 minutes. The temperature of the system can be increased. An ice bath can be used to keep the emulsion at room temperature. The chitosan solution was added on the emulsion drop to drop using a peristaltic pump and taking control of the temperature (~25°C). The dispersion was stirred for 15 minutes.
- Then, the tripolyphosphate sodium solution was added drop by drop using a peristaltic pump to control de dripping speed.
- The microparticles were stirred for 15 minutes more and decant overnight at 2-8°C.
- The supernatant was extracted by peristaltic pump and washing solution composed by 0.05M NaCl solution. The suspension was washed for 10 minutes using magnetic stirrer.
- Then, the suspension was centrifuged. The pellet was introduced into sachets, vacuum sealer and stored at 2-8°C.

Example 3. A stabilized microparticle using arabic gum as hydrocolloid, pea protein as emulsifier, xanthan gum as second hydrocolloid, preferably as co-emulsifier, microalgae oil, tocopherols and rosemary extract as antioxidants, chitosan as polymeric shell and sodium tripolyphosphate as stabilizer.
- Preparation of a chitosan solution (0.5-5%, w/w): pH regulator was added to obtain a 2% w/w acid solution in water in a glass beaker. The needed amount of chitosan was weighted and added to the 2% acid solution in the glass beaker. The chitosan was dissolved for 45 minutes stirring at speed 3 and pH was adjusted to 3-4 using acid (and NaOH 0.1M if it would be necessary).
- Preparation of a Tripolyphosphate solution (TPP) (0.1-10 %, w/w). The needed amount of sodium tripolyphosphate was weighted and added to water in the glass beaker. The TPP was dissolved for 30 minutes stirring and pH was adjusted to 3-4 using pH regulator (and NaOH 0.1M if it would be necessary).
- Preparation of an arabic gum - pea protein - xanthan gum (5-30%, w/w): distilled water was added to arabic gum and pea protein in a glass beaker. It was stirred for 1 hour at speed 3. Then, pH of the solution was adjusted to 3-4.
- Then, the oil was mixed with the antioxidants under magnetic stirring.
- The rod of the Ultraturrax was inserted in the arabic gum solution - pea protein - xanthan gum solution, the system speed was increased to 11.000 rpm. Then, the mixture of microalgae oil and antioxidant was poured slowly and left 10 minutes. The temperature of the system can be increased. An ice bath can be used to keep the emulsion at room temperature. The chitosan solution was added on the emulsion drop to drop using a peristaltic pump and taking control of the temperature (~25°C). The dispersion was stirred for 15 minutes.
- Then, the tripolyphosphate sodium solution was added drop by drop using a peristaltic pump to control de dripping speed.
- The microparticles were stirred for 15 minutes more and decant overnight at 2-8°C.
- The supernatant was extracted by peristaltic pump and washing solution composed by 0.05M NaCl solution. The suspension was washed for 10 minutes using magnetic stirrer.
- Then, the suspension was centrifuged. The pellet was introduced into sachets, vacuum sealer and stored at 2-8°C.

Example 4. A stabilized microparticle using arabic gum as hydrocolloid, pea protein as emulsifier, xanthan gum as second hydrocolloid, preferably as co-emulsifier, algae oil, gluten as polymeric shell and sodium tripolyphosphate as stabilizer.
- Preparation of a gluten solution (0.5-5%, w/w): the needed amount of gluten was weighted and added to a 20-80% ethanol / water solution in a glass beaker. The gluten was dissolved for 1 hour stirring and then, pH was adjusted to 3-4 using acid (and NaOH 0.1M if it would be necessary).
- Preparation of a Tripolyphosphate solution (TPP) (0.1-10 %, w/w). The needed amount of sodium tripolyphosphate was weighted and added to water in the glass beaker. The TPP was dissolved for 30 minutes stirring and pH was adjusted to 3-4 using pH regulator (and NaOH 0.1M if it would be necessary).
- Preparation of an arabic gum - pea protein - xanthan gum (5-30%, w/w): distilled water was added and to arabic gum and chickpea protein in a glass beaker. It was stirred for 1 hour at speed 3. Then, pH of the solution was adjusted to 3-4.
- Then, the oil was mixed with the antioxidants under magnetic stirring.
- The rod of the Ultraturrax was inserted in the Arabic gum solution - pea protein - xanthan gum solution, the system speed was increased to 11.000 rpm. Then, the algae oil was poured slowly and leave 10 minutes. The temperature of the system can be increased. An ice bath can be used to keep the emulsion at room temperature. The gluten solution was added on the emulsion drop to drop using a peristaltic pump and taking control of the temperature (~25°C). The dispersion was stirred for 15 minutes.
- Then, the tripolyphosphate sodium solution was added drop by drop using a peristaltic pump to control de dripping speed.
- The microparticles were stirred for 15 minutes more and decant overnight at 2-8°C.
- The supernatant was extracted by peristaltic pump and washing solution composed by 0.05M NaCl solution. The suspension was washed for 10 minutes using magnetic stirrer.
- Then, the suspension was centrifuged. The pellet was introduced into sachets, vacuum sealer and stored at 2-8°C.

Example 5. A stabilized microparticle using arabic gum as hydrocolloid, potato protein as emulsifier, alginate as second hydrocolloid, preferably as co-emulsifier, algae oil, gluten as polymeric shell and transglutaminase as stabilizer.
- Preparation of a gluten solution (0.5-5%, w/w): the needed amount of gluten was weighted and added to a 20-80% ethanol / water solution in a glass beaker. The gluten was dissolved for 1 hour stirring and then, pH was adjusted to 3-4 using acid (and NaOH 0.1M if it would be necessary).
- Preparation of a Transglutaminase solution (0.1-10 %, w/w). The needed amount of transglutaminase was weighted and added to water in the glass beaker. It was dissolved for few minutes and pH was adjusted to 5-7 using pH regulators.
- Preparation of an arabic gum - potato protein - alginate (5-30%, w/w): distilled water was added to arabic gum, potato protein and alginate in a glass beaker. It was stirred for 1 hour. Then, pH of the solution was adjusted to 3-4.
- Then, the oil was mixed with the antioxidants under magnetic stirring.
- The rod of the Ultraturrax was inserted in the arabic gum solution - potato protein - alginate solution, the system speed was increased to 11.000 rpm. Then, the mixture of oil and antioxidant was poured slowly and leave 10 minutes. The temperature of the system can be increased. An ice bath can be used to keep the emulsion at room temperature. The gluten solution was added on the emulsion drop to drop using a peristaltic pump and taking control of the temperature (~25°C). The dispersion was stirred for 15 minutes.
- Then, the pH of the dispersion was increased to 5-7 and the transglutaminase solution is added.
- The microparticles were stirred for, at least, 1 hour at 35°C and decant overnight at 2-8°C.
- The supernatant was extracted by peristaltic pump and washing solution composed by 0.05M NaCl solution. The suspension was washed for 10 minutes using magnetic stirrer.
- Then, the suspension was centrifuged. The pellet was introduced into sachets, vacuum sealer and stored at 2-8°C.

Example 6. A stabilized microparticle using arabic gum as hydrocolloid, lentil protein as emulsifier, alginate as second hydrocolloid, preferably as co-emulsifier, algae oil, chitosan as polymeric shell, TPP as stabilizer and serial layers of CH-TPP.
- Preparation of a chitosan solution (0.5-5%, w/w): pH regulator was added to obtain a 2% w/w acid solution in water in a glass beaker. The needed amount of chitosan was weighted and added to the 2% acid solution in the glass beaker. The chitosan was dissolved for 45 minutes stirring at speed 3 and pH was adjusted to 3-4 using acid (and NaOH 0.1M if it would be necessary).
- Preparation of a Tripolyphosphate solution (TPP) (0.1-10 %, w/w). The needed amount of sodium tripolyphosphate was weighted and added to water in the glass beaker. The TPP was dissolved for 30 minutes stirring and pH was adjusted to 3-4 using pH regulator (and NaOH 0.1M if it would be necessary).
- Preparation of an arabic gum - lentil protein - alginate (5-30%, w/w): distilled water was added to arabic gum, lentil protein and alginate in a glass beaker. It was stirred for 1 hour. Then, pH of the solution was adjusted to 3-4.
- Then, the oil was mixed with the antioxidants under magnetic stirring.
- The rod of the Ultraturrax was inserted in the arabic gum solution - lentil protein - alginate solution, the system speed was increased to 11.000 rpm. Then, the mixture of oil and antioxidant was poured slowly and leave 10 minutes. The temperature of the system can be increased. An ice bath can be used to keep the emulsion at room temperature. The gluten solution was added on the emulsion drop to drop using a peristaltic pump and taking control of the temperature (~25°C). The dispersion was stirred for 15 minutes.
- Then, the tripolyphosphate sodium solution was added drop by drop using a peristaltic pump to control de dripping speed.
- The microparticles were stirred for 15 minutes and decant overnight at 2-8°C.
- The supernatant was extracted by peristaltic pump and washing solution composed by chitosan solution. The suspension was coated for 10 minutes using magnetic stirrer.
- Then an extra layer of TPP can be added. The suspension coated with chitosan was centrifuged and the pellet was redispersed in TPP solution.
- The process can be repeated for chitosan or chitosan-TPP extra layers.
- Finally, the suspension was centrifuged. The pellet was introduced into sachets, vacuum sealer and stored at 2-8°C.

Example 7. A stabilized microparticle using arabic gum as hydrocolloid, lentil protein as emulsifier, alginate as second hydrocolloid, preferably as co-emulsifier, microalgae oil, chitosan as polymeric shell, TPP as stabilizer, gluten as extra layer and transglutaminase as stabilizer of the extra layer.
- Preparation of a chitosan solution (0.5-5%, w/w): pH regulator was added to obtain a 2% w/w acid solution in water in a glass beaker. The needed amount of chitosan was weighted and added to the 2% acid solution in the glass beaker. The chitosan was dissolved for 45 minutes stirring at speed 3 and pH was adjusted to 3-4 using acid (and NaOH 0.1M if it would be necessary).
- Preparation of a Tripolyphosphate solution (TPP) (0.1-10 %, w/w). The needed amount of sodium tripolyphosphate was weighted and added to water in the glass beaker. The TPP was dissolved for 30 minutes stirring and pH was adjusted to 3-4 using pH regulator (and NaOH 0.1M if it would be necessary).
- Preparation of a gluten solution (0.1-5%): the needed amount of gluten was weighted and added to water in the glass beaker. The gluten was dispersed for 1 hour stirring and pH was adjusted to 3-4 using pH regulator (and NaOH 0.1M if it would be necessary). If it is necessary centrifuge to eliminate clumps.
- Preparation of a Transglutaminase solution (0.1-10 %, w/w). The needed amount of transglutaminase was weighted and added to water in the glass beaker. It was dissolved for few minutes and pH was adjusted to 5-7 using pH regulators.
- Preparation of an arabic gum - lentil protein - alginate (5-30%, w/w): distilled water was added to arabic gum, lentil protein and alginate in a glass beaker. It was stirred for 1 hour. Then, pH of the solution was adjusted to 3-4.
- Then, the oil was mixed with the antioxidants under magnetic stirring.
- The rod of the Ultraturrax was inserted in the arabic gum solution - lentil protein - alginate solution, the system speed was increased to 11.000 rpm. Then, the mixture of microalgae oil and antioxidant was poured slowly and leave 10 minutes. The temperature of the system can be increased. An ice bath can be used to keep the emulsion at room temperature. The gluten solution was added on the emulsion drop to drop using a peristaltic pump and taking control of the temperature (~25°C). The dispersion was stirred for 15 minutes.
- Then, the tripolyphosphate sodium solution was added drop by drop using a peristaltic pump to control de dripping speed.
- The microparticles were stirred for 15 minutes and decant overnight at 2-8°C.
- The supernatant was extracted by peristaltic pump and washing using the solution composed by gluten solution. The suspension was coated for 10 minutes using magnetic stirrer.
- Then, the pH of the dispersion was increased to 5-7 and the transglutaminase solution was added.
- The microparticles were stirred for, at least, 1 hour at 35°C and decant overnight at 2-8°C.
- The process can be repeated extra layers.
- Finally, the suspension was centrifuged. The pellet was introduced into sachets, vacuum sealer and stored at 2-8°C.

Example 8. A stabilized microparticle using arabic gum as hydrocolloid, pea protein as emulsifier, pectin as second hydrocolloid, preferably as co-emulsifier, essential oils and sunflower oil, pea protein as polymeric shell and sodium tripolyphosphate as stabilizer.
- Preparation of a pea protein solution (0.1-5%): the needed amount of pea protein was weighted and added to water in the glass beaker. The pea protein was dissolved for 1 hour stirring and pH was adjusted to 3-4 using pH regulator (and NaOH 0.1M if it would be necessary). Centrifuge to eliminate clumps if it is necessary.
- Preparation of a Tripolyphosphate solution (TPP) (0.1-10 %, w/w). The needed amount of sodium tripolyphosphate was weighted and added to water in the glass beaker. The TPP was dissolved for 30 minutes stirring and pH was adjusted to 3-4 using pH regulator (and NaOH 0.1M if it would be necessary).
- Preparation of an arabic gum - pea protein - pectin (5-30%, w/w): distilled water was added to arabic gum and chickpea protein in a glass beaker. It was stirred for 1 hour. Then, pH of the solution was adjusted to 3-4.
- Then, the essential oils were mixed with the sunflower oil under magnetic stirring.
- The rod of the Ultraturrax was inserted in the arabic gum solution - pea protein - xanthan gum solution, the system speed was increased to 11.000 rpm. Then, the mixture of oil and antioxidant was poured slowly and leave 10 minutes. The temperature of the system can be increased. An ice bath can be used to keep the emulsion at room temperature. The pea protein solution was added on the emulsion drop to drop using a peristaltic pump and taking control of the temperature (~25°C). The dispersion was stirred for 15 minutes.
- Then, the tripolyphosphate solution was added drop by drop using a peristaltic pump to control de dripping speed.
- The microparticles were stirred for 15 minutes more and decant overnight at 2-8°C.
- The supernatant was extracted by peristaltic pump and washing solution composed by NaCl solution. The suspension was washed for 10 minutes using magnetic stirrer.
- Then, the suspension was centrifuged. The pellet was introduced into sachets, vacuum sealer and stored at 2-8°C.

Example 9. A stabilized microparticle using arabic gum as hydrocolloid, pea protein as emulsifier, xanthan gum as second hydrocolloid, preferably as co-emulsifier, algae oil, zein as polymeric shell, sodium tripolyphosphate as stabilizer and bacon aroma.
- Preparation of a zein solution (0.5-10%, w/w): the needed amount of zein is weighted and added to 60-95% (w/w) ethanol / water mixture in a glass beaker. Zein protein is dissolved for 1 hour stirring and pH is adjusted 3-4 using pH regulator (and NaOH 0.1M if it would be necessary).
- Preparation of a bacon aroma solution (0.001-10%, w/w): the needed amount of bacon aroma is weighted and added to water in a glass beaker. Let dissolve the bacon aroma for few minutes stirring.
- Preparation of a Tripolyphosphate solution (TPP) (0.1-10 %, w/w). The needed amount of sodium tripolyphosphate is weighted and added to water in the glass beaker. The TPP is dissolved for 30 minutes stirring and pH is adjusted to 3-4 using pH regulator (and NaOH 0.1M if it would be necessary).
- Preparation of an arabic gum - pea protein - xanthan gum (5-30%, w/w): distilled water is added to arabic gum and chickpea protein in a glass beaker. Let it stir for 1 hour at speed 3. Then, pH of the solution is adjusted to to 3-4.
- The rod of the Ultraturrax is inserted in the arabic gum solution - pea protein - xanthan gum solution, the system speed is increased to 11.000 rpm. Then, the algae oil is poured slowly and leave 10 minutes. The temperature of the system can be increased. An ice bath can be used to keep the emulsion at room temperature. The gluten solution is added on the emulsion drop to drop using a peristaltic pump and taking control of the temperature (~25°C). Leave the dispersion stir for 15 minutes.
- Then, the tripolyphosphate sodium solution is added drop by drop using a peristaltic pump to control de dripping speed.
- Leave the microparticles stirring for 15 minutes more and decant overnight at 2-8°C.
- The supernatant is extracted by peristaltic pump and washing solution composed by 0.05M NaCl solution. The suspension is washed for 10 minutes using magnetic stirrer.
- Then, the suspension is centrifuged. The pellet is mixed with the aroma solution during few minutes to assure the homogenization. Then, the microparticles are introduced into sachets, vacuum sealer and stored at 2-8°C.

Example 10. A stabilized microparticle using arabic gum as hydrocolloid, pea protein as emulsifier, xanthan gum as second hydrocolloid, preferably as co-emulsifier, sunflower oil, tocopherols and rosemary extract as antioxidants, chitosan as polymeric shell and sodium tripolyphosphate as stabilizer.
- Preparation of a chitosan solution (0.5-5%, w/w): pH regulator was added to obtain a 2% w/w acid solution in water in a glass beaker. The needed amount of chitosan was weighted and added to the 2% acid solution in the glass beaker. The chitosan was dissolved for 45 minutes stirring at speed 3 and pH was adjusted to 3-4 using acid (and NaOH 0.1M if it would be necessary).
- Preparation of a Tripolyphosphate solution (TPP) (0.1-10 %, w/w). The needed amount of sodium tripolyphosphate was weighted and added to water in the glass beaker. The TPP was dissolved for 30 minutes stirring and pH was adjusted to 3-4 using pH regulator (and NaOH 0.1M if it would be necessary).
- Preparation of an arabic gum - pea protein - xanthan gum (5-30%, w/w): distilled water was added to arabic gum and pea protein in a glass beaker. It was stirred for 1 hour at speed 3. Then, pH of the solution was adjusted to 3-4.
- Then, the sunflower oil was mixed with the antioxidants under magnetic stirring.
- The rod of the Ultraturrax was inserted in the arabic gum solution - pea protein - xanthan gum solution, the system speed was increased to 11.000 rpm. Then, the mixture of oil and antioxidant was poured slowly and left 10 minutes. The temperature of the system can be increased. An ice bath can be used to keep the emulsion at room temperature. The chitosan solution was added on the emulsion drop to drop using a peristaltic pump and taking control of the temperature (~25°C). The dispersion was stirred for 15 minutes.
- Then, the tripolyphosphate sodium solution was added drop by drop using a peristaltic pump to control de dripping speed.
- The microparticles were stirred for 15 minutes more and decant overnight at 2-8°C.
- The supernatant was extracted by peristaltic pump and washing solution composed by 0.05M NaCl solution. The suspension was washed for 10 minutes using magnetic stirrer.
- Then, the suspension was centrifuged. The pellet was introduced into sachets, vacuum sealer and stored at 2-8°C.

### Results

Stages in the process of obtaining oil microparticles are described in Figure 5. The first step (a) corresponds to the preparation of emulsion of oil droplets in water containing negatively charged hydrocolloid and positively charged emulsifier. In the second step (b), the positive polymer solution is dripped onto the emulsion to obtain the oil-containing microparticles. In the third step (c) the microparticles are stabilised when the cross linker solution is dripped, usually when the polymer coating is crosslinked. In the fourth step (d), an additional layer is obtained when the polymer solution is dripped. In a final step (e) the last polymer layer is stabilised with cross linker solution. The process (d and e) can be repeated several times to obtain multilayer microparticles.

The charge of the microparticles components was measured (Fig 1). 1% (w/w) solutions of the different raw materials that can take part of the microparticles were prepared and adjusted to pH 3 -4. The charge acquired by a particle or molecule in a specific medium is its zeta potential, which results from the surface charge, concentration and types of ions present in the solution. The polymers, hydrocolloids or emulsifiers were solubilised individually in water at 1% (w/w) and the pH was adjusted to 3 - 4 using lactic acid or NaOH. The Z-potential (mEv) of the solutions and dispersions were measured by Zetasizer Nano ZS. The Fig. 1 shows the different components from 1 to 10 being xanthan gum, alginate, pectin, arabic gum, gluten, zein, lentil protein isolate, pea protein isolate, chickpea protein isolate and chitosan on the horizontal axis and their Z-potential when 1% (w/w) solution was prepared and the pH adjusted to 3-4 on the vertical axis. The gums as xanthan and arabic gum, pectin and alginate show a negative charge while gluten and zein presented a charge lightly positive in the measured conditions. For the protein isolates the charge is positive although more variable than other components due to the different proteins in their composition. Finally, chitosan shows a high positive charge in the cited conditions.

The stability of the emulsion was studied for different components (Fig. 2). The stability of the emulsion refers to the ability of an emulsion to maintain its structure and physical properties over a period of time, without separating into its original phases (usually a continuous liquid phase and a dispersed phase). A stable emulsion retains its uniformity without visible separation, such as layering (creaming, settling, coalescence, or breakdown). The emulsions were fabricated according to the examples 1-9. Then, 40 mL of emulsion were poured into a falcon tube and centrifuged at 3600 G for 15 minutes to separate phases. The water phase separation was measured in mL (vb). The emulsion stability was indicated in percentage applying the next formula where va is the volume of water phase (and polymers dissolved in water) before centrifugation (in formula): % *emulsion stability=1*00 * (*va-vb*)/*va*

The graphic shows the stability of different types of emulsions without emulsifier (Em) or co-emulsifier (Co-Em), only Em, only Co-Em, adding both Em and CoEm in a ratio Oil:Em+CoEm of 2.5:1 (w:w) and in ratio 0.9:1 (w:w). Adding only emulsifier (Em) or co-emulsifier (CoEm) does not improve the emulsion stability significantly while the combined used of both components improve significantly the stability of the emulsion as Fig. 2 indicates. When the relation of oil and emulsifiers is 0.9:1, the emulsion acquires the 100% of stability for the studied conditions.

The microparticles stability and its relation with sensory analysis for example 3 and extra layers and/or cross-linkings was studied. The goal is to set up the minimum stability for microparticles necessary to not detect the fish smell and/or flavour in a model food matrix. The figure 3a shows the effect of different polymer extra layers for the example III. These extra layers can be made of Poly. 1: pea protein, Poly.2: gluten or Poly.3: chitosan and the extra cross-linkers applied after the layers can be CL. 1: transglutaminase and CL.2: tripolyphosphate. In addition, 3 layers or 4 were carried out for Poly.3 and CL.2. To measure the stability, the final microparticles were redispersed in 0.05 M NaCl and centrifuged at 3250 G for 15 minutes. The supernatant was collected and the turbidity was measured to assess the ability of the particles to maintain their integrity after processing. A clear supernatant (no turbidity) indicates that the microparticles retain their structure and do not break up, whereas when they do break up, small particles and oil droplets may come out of the capsule and turbidity increases. The turbidity was measured using a HI 98713 according to ISO 7027 method from 0,00 to 1000 FNU (Formazin Nephelometric Units). The figure 3a shows the stability for example III and the extra layers indicating that when Poly. 1, Poly.3-CL.2 or Poly.3-CL.2-Poly.3-CL.2 as extra layers can increase the turbidity of the example III (no extra layers). Other extra layers, on the other hand, can increase the stability of the example III as Poly.1-CL.1, Poly.2, Poly.2-CL1, Poly.3 or Poly.3-CL.2-Poly.3.

The figure 3b shows the organoleptic tasting for these microparticles to study the relation with their stability. For organoleptic tasting, the microparticles were redispersed in commercial mayonnaise using a paddle stirrer for 10 minutes. Then, the mixtures containing at least 625 mg of DHA per 100 g of final product were kept refrigerated for 72 hours until sensory analysis. 20 panel tasters participated in 3 occasions to obtain the data. The tasters evaluated the fish smell and flavour from 0 to 10 for each sample and the media value is represented. Even in the case of uncoated sunflower oil microparticles (negative control), a minimal fish smell and taste were reported by the tasters, likely influenced by suggestion. So, this negative control is the threshold for fish smell and flavour. The microparticles which presented no significative different organoleptic results from negative control were considered no fish tasted. These microparticles are composed by Poly.2, Poly.2 - CL1, Poly.3 and Poly.3 - CL.2 - Poly3. According to graphic 3a, these microparticles which no presented fish smell or taste were related to their turbidity indicating the more stable is the capsule the less fish smell and flavour is found. In addition, the maximum turbidity is 30 FNU (line in graphic 3A) to not detect fish in the final matrices.

The microalgae oil in microparticles was studied to assure the properties of the raw oil are kept after processing and the obtention of the microparticles do not alter its characteristics. The oil was extracted from the microparticles as follows. The microparticles were frozen and the oil was extracted using hexane: isopropanol solvents centrifugations, phase separations and solvent evaporation. This methodology assures the perfect conditions of the oil during the process and the no alteration of the oil from oxidation point of view during extraction and purification. In addition, the raw oil was used to measure peroxide index (titrimetry), unsaponificable (titrimetry), percentage of fatty acids (Gas Chromatography Flame Ionization Detector, GC-FID), and trans fatty acids (GC-FID) to compare to the extracted oil from microparticles.

Table 1 shows the regulatory values for *Schizochytrium* sp. Oil (EU 2018/1023), the measured properties of the pure microalgae oil and the oil after extraction from the microparticles. None of the parameters measured for the oil are altered after the formation of microparticles and are below the regulatory declarations.

**Table 1. The properties of microalgae oil after the process of microparticle formation compared to the raw microalgae oil and the regulatory values.**

| Analysis | Regulatory values EU 2018/1023 | Raw microalgae oil | Example 2 |
|---|---|---|---|
| Peroxide index (meq O₂/kg oil) | ≤ 5.0 | <0.1 | <0.1 |
| Unsaponificable (%) | ≤ 4.5 | 1 | 1.1 |
| Trans fatty acids (%) | ≤ 1.0 | 0.09 | 0.10 |
| DHA Content (%) | ≥ 32.0 | 51.85 | 43.49 |
| p-anisidine index (E1%-1cm, 350) | - | 3.4 | 2.7 |
| Hexanal (mg/kg) | - | <10 | <10 |

The microparticles were kept under oxidation conditions and the oxidation state of the oil was tested and correlated with a sensory analysis (Fig. 4) and compared to current commercial solutions based on fish oil.

The commercial products, MEG-3 15 N-3 High DHA Powder S/SD (5011639 005) and MEG-3 30% B powder (5016228 S03) by DSM, are microparticles containing omega-3 from fish oil. The first product, MEG-3 15 N-3 High DHA Powder S/SD, contains 16% Omega-3, of which 13% is DHA. Its ingredients include DHA-rich refined fish oil, modified food starch, sodium ascorbate as an antioxidant, ascorbyl palmitate and silicon dioxide as a processing agent, along with citric acid. On the other hand, the second product, MEG-3 30% B Powder, combines 60% oil with 30% Omega-3 (of which 18% is DHA+EPA) and is composed of refined fish oil (sardine, anchovy or mackerel and/or herring), bovine gelatine, sodium ascorbate, canola oil, citric acid, tocopherols and natural flavourings (US6974592).

To keep both, the commercial product and the examples 3 and 7 of the present document, under oxidative conditions, the microparticles' packaging was opened and stored at 4°C. After 15 days, 75 g of microparticles were redispersed into 500 mL of 0.05 M NaCl solution and kept for 7 days at 4°C. Then, the oil was extracted as previously indicated by hexane: isopropanol and the organic solvent were evaporated. Then, the oxidation state of the oil was studied measuring), peroxide index (titrimetry) and p-anisdine index (spectrophotometry) (Table 2). Peroxide value is the most effectively used parameter to quantity the onset and the degree of oxidation in oils as it is a measure of hydroperoxides formed in the primary stages of oxidation. In addition, p-anisidine value measures the secondary oxidation product (aldehyde and ketone, etc.) produced during oxidative degradation of oils, which is usually estimated by using isooctane as the solvent under 350 nm of wavelength (AOCS, 2011).

**Table 2. The oxidation state of the oil after subjecting the microparticles to oxidising conditions compared to commercial products.**

| **Sample** | **Peroxide index** (meq O2/kg oil) | **p-anisinde index** (E1%-1 cm, 350) |
|---|---|---|
| **Example 3** | 1.2 | 2.7 |
| **Example 7** | <0.1 | 1.3 |
| **MEG3 30% (DSM)** | 0.9 | 6.8 |
| **MEG 3'15' (DSM)** | <0.1 | 9.6 |

The p-anisidine index is higher for MEG3 15' (DSM) and MEG 3 `15' than for the microparticles for the present invention according to Example 3 and 7. The high p-anisidine value indicaties that the oil for MEG3 15' (DSM) and MEG 3 `15' contains higher amounts of secondary oxidation products (aldehydes and ketones), reflecting a more advanced oxidative state in the commercial ones (Marina S. Nogueira et al. 2019, , LWT, 101, 113-122). The aldehydes formed during secondary oxidation are associated with the sensory experience of fish flavour and odor (Wojciech Kolanowski, et al. 2007, Journal of the Science of Food and Agriculture, 87, 181-191). In addition, they can also be harmful to health if consumed in significant quantities, as they are associated with cytotoxic and pro-inflammatory effects (Yu Wang, Ping Cui, 2015, Journal of Agricultural and Food Chemistry, 63, 6293-6296, Pim Jansson and Bartholomew Kay, 2018, Nutrition, 60, 74-79).

Therefore, Example 7 is in a preliminary phase of oxidation, the example 3 is undergoing active primary oxidation and MEG oils are in a more advance oxidative state due to the higher amounts of secondary oxidation products.

The oxidative state of the oil (table 2) was related to the sensory analysis (Figure 4). For organoleptic tasting, the microparticles were redispersed in commercial dairy product using a paddle stirrer for 10 minutes. Then, the mixtures containing 250 mg of DHA per 100 g of sample microparticle were stored refrigerated for 72 hours until sensory analysis. 20 panel tasters participated in 3 occasions to obtain the data. The tasters indicated if fish smell or flavour was found. The figure 4 shows the percentage of tasters that found fishy attributes and the microparticles types (Figure 4). Between 60-90% of the tasters found fishy attributes for commercial products, whereas around 11% found fish smell and 20% fish flavour for example 3. For example 7, 1% found fish smell and 2% fish flavour but no significative differences were found for the negative control (Example 10 made of sunflower oil). Therefore, the threshold indicates no fish flavour was found for example 7.

According to table 2 and the results for the sensory analysis, the high p-anisidine levels of commercial samples are associated with the presence of aldehydes and ketones, which are responsible for the strong fishy taste in oxidised oils. Therefore, it is reasonable to assume that these two oils are the ones that showed the strongest flavour during the organoleptic tests.

Table 3 compares different microparticle preparation techniques prior to the present invention. The microparticles were fabricated following a protocol based on literature (Sohini Ray et al., 2016, Food Bioscience, 13, 76-83, Marilene D.M. et al., 2012, Food Research International, 47, 38-44, Martin G O'Toole, et al., 2012, Biomacromolecules, 13, 2309-2314). The resulted microparticles were characterised following the next tests: water dispersion, high and low temperature (freezing) resistance, mechanical stress and ionic stress. The tests were performed as follows.

**Table 3. Comparative table for different microparticle preparations prior to the present invention.**

| | | | | | | | |
|---|---|---|---|---|---|---|---|
| Composition | **Test** | **1** | **2** | **3** | **4** | **5** | |
| | | **Polar dry** | **Polar dry** | **Polar dry** | **Coacervation** | **Spray drying** | **Example 2** |
| | Core | DHA rich microalgae oil | DHA rich microalgae oil | DHA rich microalgae oil | DHA rich microalgae oil | DHA rich microalgae oil | DHA rich microalgae oil |
| | Hydrocolloid | Arabic gum | Arabic gum | Stearic acid* | Gelatine | Chitosan | Arabic gum /alginate |
| | Polymer | maltodextrin DE12 | Hydroxyprop yl Methyl Cellulose | | Arabic gum | | Chitosan |
| | Emulsifier | tween 80 | tween 80 | | | tween 80 | Lentil protein |
| | Cross-linker | | | | Tripolyphosph ate | | Tripolyphosp hate |
| Properties | Dispersion in water | No** | Yes | Yes | Yes | Yes | Yes |
| | Temperature resistance | - | Yes | No | No | Yes | Yes |
| | Freezing | - | No | - | - | Yes | Yes |
| | Mechanical stress | - | - | - | - | No | Yes |
| | Ionic stress | - | - | - | - | - | Yes |

| | | | | | | | |
|---|---|---|---|---|---|---|---|
| *Stearic acid is not a hydrocolloid, but it works as principal encapsulation component. **Yes/No indicates whether the microparticles pass / fail the test according to the criteria. If they fail the test, the next test is not performed (-). | | | | | | | |

Dispersion in water: 2.5 g of microparticles were put into 20 g of 0.05M NaCl solution and magnetically stirred. Then, a drop was put on a slide and observed under optic microscopy. If the particles dissolved, they did not pass the test.

Temperature resistance: 1 g of microparticles were put in a glass plate and heated to 80°C in a prewarmed oven. After 30 minutes the microparticles were observed. If the particles were melted or oil out was observed, the microparticles did not pass the test.

Freezing: the microparticles were dispersed and then frozen at -20°C for 24 h. After that, they dispersion was centrifuged to observe oil on the top phase of the water. If oil was observed, the microparticles did not pass the test.

Mechanical stress: The dispersed microparticles were pass through a homogenizer Panda Plus (GEA) at 200 bar. Then, they were sedimented for one hour to observe the sedimentation speed compared to their control (non homogenized microparticles). When microparticles break down, the sedimentation speed is lower. In addition, to determine if the microparticles break down during homogenization, they were observed by optic microscopy. If the sedimentation speed was reduced significantly and breakings were observed under optic microscopy, the microparticles did not pass the test.

Ionic stress: the microparticles were redispersed in 0.5 and 1 M NaCl solutions. They were observed under optic microscopy. If broken microparticles were observed under optic microscopy, the microparticles did not pass the test.

The table indicates that the microparticles prepared by polar dry polar and using gum arabic, maltodextrin and tween 80 (1) failed the dispersion test, as the microparticles dissolved after being placed in water. In addition, particles 3 and 4 in table 3 prepared by the polar dry technique composed of stearic acid and gelatine, gum arabic and tripolyphosphate, respectively, failed the temperature resistance test and melted after 30 minutes at 80°C. The microparticles composed of gum arabic, hydroxypropylmethylcellulose and tween 80 (2) failed the low temperature tests showing oil droplets in the upper phase of the centrifuged tube. Finally, chitosan microparticles with tween 80 pass the above tests, but not the mechanical stress test. Finally, the microparticles prepared under the present invention as example II indicates, passed all the tests for dispersibility, temperature and freezing resistance and ionic and mechanical stress.

## Claims

1. A method for obtaining a stabilized microparticle comprising the steps of:
(i) providing an oil-in-water (o/w) emulsion comprising a lipid phase (o), a water phase (w) and an emulsifier with net positive charge, wherein the aqueous phase contains at least one hydrocolloid with net negative charge,
(ii) contacting the o/w emulsion with a polymer wherein said contacting is carried out under pH conditions that results in that the net charge of the polymer is positive and under conditions that allow the binding of the polymer and hydrocolloid into microparticles containing a core region formed by the emulsion and a polymer shell, and
(iii) stabilizing the polymer thereby leading to stabilized microparticles.

2. The method according to claim 1, wherein the method further comprises (iv) forming one or more additional stabilized polymer layers around the shell of the microparticle, wherein each additional stabilized polymer layer is added by a method that comprises:
a) contacting the microparticle with an additional polymer, wherein said contacting is carried out under conditions that result in the net charge of the additional polymer being opposite to the net charge of the microparticle and under conditions that allow the binding of the additional polymer and the microparticle, and
b) stabilizing the additional polymer thereby leading to the formation of an additional stabilized layer.

3. The method according to any one of claims 1 or 2, wherein the additional polymer used in each of the additional stabilized polymer layers is the same as the polymer used in step (ii) or is different from the polymer used in step (ii).

4. The method according to any one of claims 1 to 3, wherein the emulsifier with net positive charge in the oil-in-water (o/w) emulsion is selected from the group consisting of: monoglycerides and diglycerides, esters, sucroesters and sucroglycerides, propylenglycol fatty acid esters, polyglyceride fatty acid esters, organic acid mono- and diglycerides esters, polysorbates, fatty acid salts, lecithins, denatured or not, hydrolysed or not vegetable protein as pea protein, rice protein, lentil protein, chickpea protein, potato protein, oak protein, soy protein, wheat protein, rye protein, barley protein, oat protein, corn protein, lupine protein, sorghum protein, quinoa protein, canola protein, fava bean protein, mung bean protein, navy bean protein, peanut protein, sunflower protein, almond protein; denatured or not, hydrolysed or not protein from animal origin as collagen, gelatine, casein and whey proteins; and fermented protein as a soy-based fermented protein, a dairy-based fermented protein, a grain-based fermented protein and a legume-based fermented protein, protein isolate fractions including prolamins or prolamins and glutelins mixture as gliadin, glutenin, gluten, orzanin, hordein, secalin, zein, kafirin and avenin and combinations thereof.

5. The method according to any one of claims 1 to 4, wherein the oil comprises a vegetable oil, an animal oil, an algal oil, a microalgal oil and/or a microbial oil, or wherein the oil optionally comprises a compound which is soluble in oil or dispersible in oil.

6. The method according to any one of claims 1 to 5, wherein the at least one hydrocolloid with net negative charge is selected from the group consisting of: agar, alginate, agar-agar, carragenate, cassia gum, xanthan gum, arabic gum, acacia gum, guar gum, locust bean gum, Konjac, xanthan gum with galactomannans, gellan gum, tara gum, gelatine, cellulose and modified cellulose, pectin, dextran, dextran derivatives, pullulan, xyloglucan, polyglutamate, starch and modified starch, hyaluronic acid, polyethylene glycol, polypropylene glycol, poly(tetramethylene ether) glycol, and/or combinations thereof.

7. The method according to any one of claims 1 to 6, wherein the polymer with net positive charge used in step (ii) or the additional polymer is selected from the group consisting of chitosan, hyaluronic acid, chondroitin sulphate, chitin or a denatured or hydrolysed vegetable, animal or microbial protein selected from: albumin, casein, gelatine, collagen, apolipoprotein, pea protein, rice protein, lentil protein, chickpea protein, potato, oak, soy protein, wheat protein, rye protein, barley protein, oat protein, corn protein, lupine, sorghum, quinoa, canola, fava bean, mung bean, navy bean, peanut, sunflower and almond, or protein isolate fractions including prolamins or prolamins and glutelins mixture as gliadin, glutenin, gluten, orzanin, hordein, secalin, zein, kafirin and avenin and combinations thereof.

8. The method according to any one of claims 1 to 7, wherein the pH conditions in step (ii) are acidic conditions and wherein the acidic conditions result from the addition of an acid to the emulsion.

9. The method according to any one of claims 1 to 8, wherein the stabilization in step (iii) or the stabilization of the additional polymer is carried out by physical or chemical means.

10. The method according to any one of claims 1 to 9, wherein the lipid or water phase contain one or more additives.

11. A stabilized microparticle comprising:
a) a core, wherein the core comprises:
i) an oil-in-water (o/w) emulsion; comprising a lipid phase (o) and a water phase (w) and an emulsifier with net positive charge and
ii) at least a first hydrocolloid with net negative charge dissolved or dispersed in the aqueous phase,
b) a shell comprising at least one stabilized polymer layer.

12. A food or feed composition comprising at least one stabilized microparticle obtained by the method according to any one of claims 1 to 10 or at least one stabilized microparticle according to claim 11, said food or feed composition comprising one or more edible ingredients.

13. A pharmaceutical composition comprising at least one stabilized microparticle obtained by the method according to any one of claims 1 to 10 or at least one stabilized microparticle according to claim 11, and a pharmaceutical acceptable carrier.

14. A cosmetic composition comprising at least one stabilized microparticle obtained by the method according to any one of claims 1 to 10 or at least one stabilized microparticle according to claim 11, and a cosmetically acceptable carrier.

15. A nutraceutical composition comprising at least one stabilized microparticle obtained by the method according to any one of claims 1 to 10 or at least one stabilized microparticle according to claim 11, and a nutraceutical acceptable carrier.
